# EUROPÄISCHE PATENTSCHRIFT

(11) **EP 3 863 830 B1**
(45) Veröffentlichungstag und Bekanntmachung des Hinweises auf die Patenterteilung: **26.03.2025**
(21) Anmeldenummer: 19782547.4
(22) Anmeldetag: 30.09.2019
(51) Int. Cl.: B29C 51/16, B29L 31/34, B29C 51/12, G06F 3/041, B29C 51/14

(54) **VERFAHREN ZUR HERSTELLUNG EINES MEHRSCHICHTKÖRPERS UND EIN MEHRSCHICHTKÖRPER**
METHOD FOR PRODUCING A MULTI-LAYER BODY AND A MULTI-LAYER BODY
PROCÉDÉ DE PRODUCTION D'UN CORPS MULTICOUCHE ET CORPS MULTICOUCHE

(30) Priorität: 09.10.2018 DE 102018124853
(43) Veröffentlichungstag der Anmeldung: 18.08.2021
(73) Patentinhaber: LEONHARD KURZ Stiftung & Co. KG, 90763 Fürth (DE); Burg Design GmbH, 4407 Steyr (AT); PolyIC GmbH & Co. KG, 90763 Fürth (DE)
(72) Erfinder: HEINRICH, Matthias, 90431 Nürnberg (DE); SÜSS, Christoph, 91126 Rednitzhembach (DE); ULLMANN, Andreas, 90513 Zirndorf (DE); HEIDL, Stefanie, 4470 Enns (AT); WIMMER, Karin, 3312 Oed (AT)
(74) Vertreter: Louis Pöhlau Lohrentz
(86) Internationale Anmeldenummer: PCT/EP2019/076456
(87) Internationale Veröffentlichungsnummer: WO 2020/074305

(56) Entgegenhaltungen:
- DE-U1- 20 307 486
- DE-U1- 20 308 525
- JP-B2- 6 140 769
- US-A1- 2003 121 767
- US-A1- 2006 104 037
- US-A1- 2008 095 988
- US-A1- 2016 192 474
- US-B2- 6 824 321

## Beschreibung

Die Erfindung betrifft ein Verfahren zur Herstellung eines Mehrschichtkörpers und einen Mehrschichtkörper.

Es ist bekannt, Sensoren, insbesondere Touchsensoren, in Kunststofffolien bereitzustellen. Eine derartige Sensorfolie ist beispielsweise in DE 10 2011 111 506 A1 beschrieben. Diese Sensorfolie weist eine Trägerfolie auf, auf welche transparente Leiterbahnen aufgebracht sind. Durch entsprechende Anordnung oder Überlagerung dieser Leiterbahnen werden kapazitive Touchsensoren in der Sensorfolie ausgebildet. Die Dokumente US 2016/0192474 A1, US 2003/0121767 A1, DE 203 08 525 U1, DE 203 07 486 U1, US2006104037A1 und US 6 824 321 B1 beschreiben jeweils einen Mehrschichtkörper und ein Verfahren zur Herstellung des Mehrschichtkörpers mittels eines Thermoformprozesses. Das Dokument JP 6 140 769 B2 beschreibt einen Mehrschichtkörper, dessen Oberflächenrelief durch einen Verformungsmechanismus bewirkt wird, der auf Zug/Druck-Mechanismen, piezoelektrischen Materialien, oder mikroelektronisch-mechanischen Systemelementen beruht.

Bei der Anwendung derartiger Sensoren ist es gegebenenfalls erforderlich oder wünschenswert, die elektrische Funktionalität mit weiteren optischen oder dekorativen Elementen zu kombinieren.

Es ist Aufgabe der vorliegenden Erfindung, ein verbessertes Verfahren zur Herstellung eines Mehrschichtkörpers und einen verbesserten Mehrschichtkörper bereitzustellen, welcher eine Sensorfunktionalität bereitstellt.

Die Aufgabe wird gelöst durch ein Verfahren zur Herstellung eines Mehrschichtkörpers gemäß Anspruch 1.

Weiter wird die Aufgabe gelöst durch einen Mehrschichtkörper gemäß Anspruch 11.

Ein solches Verfahren zur Herstellung eines Mehrschichtkörpers und ein solcher Mehrschichtkörper zeichnen sich dadurch aus, dass durch die Wahl der Prozessparameter und der verwendeten Materialien der Bestandteile des Mehrschichtkörpers, wie beispielsweise der Bestandteile der Sensorfolien und/oder des Substrats, ein Oberflächenrelief auf der der Sensorfolie abgewandten ersten Oberfläche des Substrats erzeugt wird. Die Sensorfolie und der Sensorbereich der Sensorfolie werden so einerseits durch das Substrat vor Umwelteinflüssen geschützt. Da das Substrat separat vor Vereinigung mit der Sensorfolie gefertigt wird, können für das Substrat entsprechend formstabile und chemikalienbeständige Materialien eingesetzt werden, welche bei Herstellung der Sensorfolie nicht mit den dort eingesetzten Verfahren zur Herstellung der filigranen Leiterbahnen für die Bereitstellung der Sensorfunktionalität vereinbar sind. Weiter können bei der Herstellung des Substrats auch weitere dekorative Gestaltungen in das Substrat eingebracht und/oder auf das Substrat aufgebracht werden, welche ebenfalls nicht mit den "sensiblen" Prozessbedingungen bei der Herstellung der Sensorfolien vereinbar sein müssen. Weiter wird durch das erfindungsgemäße Verfahren bewirkt, dass in der von der Sensorfolie abgewandten Oberfläche des Substrats, welche bei Verwendung als Bedienoberfläche einen entsprechenden Schutz bzw. gegebenenfalls eine entsprechende dekorative Gestaltung für die Sensorfunktionalität bereitstellt, ein passergenau zu der Sensorfolie und damit der Sensorfunktionalität ausgerichtetes Oberflächenrelief abgeformt ist. Die entsprechende Oberflächengestaltung kann durch die Sensorfolie "gesteuert" werden. Es ist nicht erforderlich, hier entsprechende zusätzliche Registrierverfahren oder Ähnliches einzusetzen und separate Prägestempel für die Abformung des Oberflächenreliefs zu schaffen. Vielmehr kann eine registergenaue Anordnung des Oberflächenreliefs zu der Sensorfunktionalität in einfacher Weise ohne zusätzlichen prozesstechnischen Aufwand geschaffen werden.

Vorteilhafte Ausgestaltungen der Erfindung sind in den Unteransprüchen bezeichnet.

Insbesondere ist es möglich, dass zumindest eine Sensorfolie der ein oder mehreren Sensorfolien vorzugsweise als Transferfolie, als Laminierfolie, als In-Mould-Folie, als Label, als In-Mould-Label und/oder als Sensorlabel ausgebildet ist und/oder bereitgestellt wird.

Vorzugsweise wird beim Bereitstellen zumindest einer Sensorfolie der ein oder mehreren Sensorfolien die Formgebung, insbesondere die Kontur und/oder das Höhenrelief, der zumindest einen Sensorfolie modifiziert. Weiter wird die Formgebung, insbesondere die Kontur und/oder das Höhenrelief, der zumindest einen Sensorfolie durch Abformung mindestens eines Oberflächenreliefs modifiziert, wobei das mindestens eine Oberflächenrelief insbesondere mittels Verfahren ausgewählt aus thermischer Replikation, UV-Replikation, Laser-Ablation, Prägen, Stanzen, Schneiden, Spritzgießen, in ein oder mehrere Schichten der Sensorfolie abgeformt wird.

Weiter bevorzugt wird die Formgebung, insbesondere das Höhenrelief und/oder die Kontur, der zumindest einen Sensorfolie durch Aufbringen ein oder mehrerer Elemente auf eine Basisfolie der Sensorfolie modifiziert, die bevorzugt mittels ein oder mehrerer der folgenden Verfahren aufgebracht werden: Drucken, insbesondere Aufdrucken eines Lacks und/oder mittels 3D-Druck, Gießen, Aufkaschieren oder Aufkleben eines ein oder mehrschichtigen Folienelements, insbesondere eines Kunststofflabels, Aufbringen eines Gewebes, insbesondere Glasfasergewebes, Aufbringen eines Fasermaterials, insbesondere eines organischen Fasermaterials, Hinterspritzen, Aufbringen der ein oder mehreren Elemente mittels eines Transferverfahrens, insbesondere eines Heiß- oder Kaltprägeverfahrens.

Es ist weiter möglich, dass als ein oder mehrere Elemente ein oder mehrere Kunststofflabel und/oder ein oder mehrere funktionale Elemente insbesondere auf eine erste Oberfläche einer Basisfolie der Sensorfolie aufgebracht werden, wobei die erste Oberfläche der Basisfolie vorzugsweise der ersten Oberfläche der Sensorfolie zugewandt ist und/oder die erste Oberfläche der Basisfolie vorzugsweise die erste Oberfläche der Sensorfolie teilweise ausbildet.

So ist es auch möglich, dass ein oder mehrere Kunststofflabels und/oder ein oder mehrere funktionale Elemente insbesondere auf ein oder mehrere der auf der ersten Oberfläche der Basisfolie der Sensorfolie aufgebrachten ein oder mehreren Kunststofflabel und/oder funktionalen Elemente aufgebracht werden. Weiter bevorzugt werden die ein oder mehreren Kunststofflabel und/oder funktionalen Elemente auf die Basisfolie in dem Sensorbereich der Sensorfolie aufgebracht und den Sensorbereich, insbesondere projiziert auf die durch die erste Oberfläche der zumindest einen Sensorfolie aufgespannten Ebene, vollständig oder teilweise überlappend.

Auch ist es möglich, dass die Sensorfolie insbesondere zumindest einen Anschlussbereich und/oder zumindest einen Kontaktbereich zur Kontaktierung, insbesondere zur elektrischen Kontaktierung, von ein oder mehreren im Sensorbereich angeordneten Sensorelementen aufweist, und dass vorzugsweise die ein oder mehreren Kunststofflabel und/oder funktionalen Elemente auf die Basisfolie in dem Sensorbereich der Sensorfolie aufgebracht werden und den Sensorbereich, insbesondere projiziert auf die durch die erste Oberfläche der zumindest einen Sensorfolie aufgespannten Ebene, vorzugsweise vollständig oder teilweise überlappen, jedoch den Anschlussbereich und/oder den Kontaktbereich der Sensorfolie bevorzugt nicht überlappen.

Es ist weiter möglich, dass der zumindest einen Anschlussbereich ein oder mehrere Kontaktbereiche, insbesondere zur elektrischen Kontaktierung, aufweist.

Vorzugsweise bestehen ein oder mehrere Sensorfolien der ein oder mehreren Sensorfolien lediglich aus einem oder mehreren Sensoren. Zur Ausbildung des Oberflächenreliefs in der ersten Oberfläche des Substrats hat es sich jedoch als vorteilhaft gezeigt, dass insbesondere ein oder mehrere Sensorfolien der ein oder mehreren Sensorfolien aus mehreren Schichten aufgebaut werden. Derartige Schichten umfassend vorzugsweise ein oder mehrere Kunststofflabel und/oder ein oder mehrere funktionale Elemente in einer beliebigen Abfolge ausgehend von den ersten Oberflächen der jeweiligen Sensorfolien, wobei ein oder mehrere funktionale Elemente der ein oder mehreren funktionalen Elemente als 3D-Elemente beziehungsweise als in alle Raumrichtungen ausgedehnte funktionale Elemente ausgebildet sind.

Weiter ist es möglich, dass insbesondere ein oder mehrere Sensorfolien der ein oder mehreren Sensorfolien ein oder mehrere weitere, vorzugsweise gedruckte, Haptikelemente umfassen. Haptikelemente weisen dabei insbesondere taktil erfassbare Strukturen oder anderweitige Eigenschaften auf. Hierbei sind ein oder mehrere Haptikelemente der ein oder mehreren Haptikelemente als in alle Raumrichtungen ausgedehnte funktionale Elemente ausgebildet und/oder haptisch, insbesondere durch menschliche Fingerkuppen und/oder Daumenkuppen erfassbar.

Es ist möglich, den zumindest einen Anschlussbereich und/oder Kontaktbereich der Sensorfolie mittels Werkzeuganpassungen aufzunehmen. Insbesondere wird der zumindest eine Anschlussbereich und/oder Kontaktbereich zumindest teilweise nicht hinterspritzt und steht insbesondere wie ein Fähnchen von dem restlichen Mehrschichtkörper und/oder dem einschichtigen oder mehrschichtigen Substrat, weg, wobei der Anschlussbereich und/oder Kontaktbereich insbesondere derart absteht, dass dieser zu einem Gegenkontakt geführt werden kann, an welchen der zumindest eine Anschlussbereich und/oder Kontaktbereich angeschlossen werden kann. Bevorzugt ist ein nicht hinterspritzter Anschlussbereich und/oder Kontaktbereich in Form eines Fähnchens nicht am Rand des Mehrschichtkörpers und/oder dem einschichtigen oder mehrschichtigen Substrat vorgesehen. Vorzugsweise steht der Anschlussbereich und/oder Kontaktbereich, insbesondere der fähnchenartige Anschlussbereich und/oder Kontaktbereich, von ein oder mehreren Oberflächen und/oder Oberflächenbereichen des Mehrschichtkörpers und/oder dem einschichtigen oder mehrschichtigen Substrat weg. Weiter bevorzugt wird der Mehrschichtkörper und/oder das einschichtige oder mehrschichtige Substrat an ein oder mehreren Randbereichen an weitere Elemente eines elektrischen Gerätes angesetzt oder in diese eingesetzt, wobei insbesondere die Möglichkeit der Kontaktierung an dem zumindest einen Anschlussbereich und/oder Kontaktbereich, insbesondere dem zumindest einen elektrischen Anschlussbereich und/oder Kontaktbereich, bevorzugt weiter bestehen bleibt.

Weiter ist es möglich, dass Kontaktstifte als Kontaktierungsmethode verwendet werden, so dass zumindest ein Sensor ohne Anschlussbereich und/oder Kontaktbereich nachträglich mittels Kontaktstifte kontaktiert wird.

Ferner ist es möglich, die Länge des Kontaktbereichs derart zu gestalten, dass der Kontaktbereich seitlich herausgeführt wird, und sich insbesondere natürlich abprägt, wobei eine derartige Abprägung vorzugsweise im Design berücksichtigt wird.

Beim Laminieren ist es möglich, die Laminiertemperatur und/oder den Laminierdruck während der Zeitdauer des Laminierens zu variieren. Beispielsweise kann das Laminieren mit einer niedrigen Laminiertemperatur beginnen, die dann stetig oder ungleichmäßig erhöht wird und/oder beispielsweise kann das Laminieren mit einem niedrigen Laminierdruck beginnen, welche dann stetig oder ungleichmäßig erhöht wird. Es sind auch andere Variationen von Laminierdruck und/oder Laminiertemperatur über die Laminierzeit möglich.

Vorzugsweise werden ein oder mehrere der funktionalen Elemente von einem Element ausgebildet, welches eine elektrische und/oder optische Funktion erbringt, insbesondere von einem Lichtleiter gebildet wird. Ein derartiger Lichtleiter besteht insbesondere aus einem Kunststoff, bevorzugt aus ein oder mehreren PMMA (PMMA = Polymethylmethacrylat) und/oder aus ein oder mehreren PC (PC = Polycarbonat) und/oder aus Glas. Weiter ist es möglich, dass ein solcher Lichtleiter oder eine Vielzahl solcher Lichtleiter in und/oder zwischen und/oder auf ein oder mehrere Sensorfolien der ein oder mehreren Sensorfolien angeordnet und/oder appliziert und/oder ausgebildet werden.

Es hat sich als vorteilhaft erwiesen, ein oder mehrere funktionale Elemente der ein oder mehreren funktionalen Elementen als Lichtleiter auszubilden. Hierdurch ist insbesondere eine gezielte Lichtführung in dem Mehrschichtkörper in Kombination mit der Ausbildung des Oberflächenreliefs in der ersten Oberfläche des Substrats möglich.

Weiter ist es möglich, als funktionale Elemente auch Gewebe aus natürlichen, pflanzlichen, und/oder synthetischen Geweben, bevorzugt Glasfasergewebe und Gelege, weiter bevorzugt pflanzliche reliefbildende Sheets, wie beispielsweise Holzfurniere, zu verwenden, wobei hierdurch die den Geweben entsprechenden Gewebereliefs oder die Gewebekonturen, insbesondere zusätzlich, in der ersten Oberfläche des Substrats als Teil des Oberflächenreliefs oder als Oberflächenrelief ausgebildet werden.

Es ist möglich, dass das Aufbringen der ein oder mehreren Sensorfolien auf die zweite Oberfläche des Substrats vorzugsweise mittels Laminieren erfolgt, wobei die Laminiertemperatur vorzugsweise zwischen 80°C und 300°C, insbesondere zwischen 100°C und 300°C, bevorzugt zwischen 120°C und 240°C, liegt, wobei insbesondere die Laminiergeschwindigkeit zwischen 0,125 m/min und 10 m/min, bevorzugt zwischen 0,25 m/min und 7,5 m/min, besonders bevorzugt zwischen 0,125 m/min und 5 m/min, liegt.

Unter "Laminiertemperatur" wird insbesondere die Oberflächentemperatur oder die Temperatur an einem Punkt oder Bereich im Inneren ein oder mehrerer Sensorfolien der ein oder mehreren Sensorfolien und/oder des Substrats beim Laminieren verstanden.

Es ist möglich, dass das Aufbringen der zumindest einen Sensorfolie der ein oder mehreren Sensorfolien, insbesondere der zumindest einen Sensorfolie der ein oder mehreren Sensorfolien umfassend zumindest eine Dekorschicht der ein oder mehreren Dekorschichten, auf die zweite Oberfläche des Substrats, insbesondere auf die zweite Oberfläche des Substrats umfassend zumindest eine Dekorschicht der ein oder mehreren Dekorschichten, vorzugsweise mittels eines Prägeverfahrens, Abrollverfahrens und/oder Hinterspritzverfahrens erfolgt.

Insbesondere weisen ein oder mehrere Dekorschichten der ein oder mehreren Dekorschichten eine Schichtdicke zwischen 0,01 mm und 10 mm, insbesondere zwischen 0,1 mm und 2,5 mm, bevorzugt zwischen 0,25 mm und 1,25 mm, auf und/oder zwischen 0,1 mm und 10 mm, insbesondere zwischen 0,25 mm und 2,5 mm, bevorzugt zwischen 0,25 mm und 1,25 mm, auf.

Es hat sich als vorteilhaft erwiesen, die ein oder mehreren Sensorfolien vorzugsweise auf die zweite Oberfläche des Substrats, insbesondere eines Substrats umfassend ein oder mehrere Dekorfolien, vorzugsweise mittels Prägeverfahren, Abrollverfahren und/oder Hinterspritzverfahren, aufzubringen beziehungsweise zu applizieren.

Weiter ist auch möglich, dass beim Thermoformen der Schichtfolge das Oberflächenrelief insbesondere mittels Tiefziehen und Erwärmung des Substrats ausgebildet wird, wobei das Substrat vorzugsweise auf eine Oberflächentemperatur zwischen 80°C und 300°C, insbesondere zwischen 90°C und 250°C, bevorzugt zwischen 100°C und 300°C, erwärmt wird, wobei insbesondere die Kerntemperatur des Substrats zwischen 120°C und 160°C, bevorzugt zwischen 100°C und 180°C, besonders bevorzugt zwischen 80°C und 200°C, liegt und/oder wobei ein Druck, insbesondere ein Überdruck zwischen 1 bar und 6 bar, insbesondere zwischen 2 bar und 5 bar, bevorzugt zwischen 2 bar und 3,5 bar, angelegt wird. Dieser Druck wirkt insbesondere von einer der beiden Seiten auf das Substrat ein. Von der entsprechenden anderen Substratseite wird vorzugsweise unterstützend zusätzlich ein Vakuum, also ein Unterdruck angelegt, welcher bevorzugt zwischen 0,1 bar und 0,9 bar, insbesondere zwischen 0,2 bar und 0,8 bar, beträgt. Beispielsweise kann von der Vorderseite des Substrats ein Überdruck und von der Rückseite des Substrats ein Unterdruck wirken oder umgekehrt, das heißt vorzugsweise, dass von der Vorderseite des Substrats ein Unterdruck und von der Rückseite des Substrats ein Überdruck angelegt wird.

Unter "Laminiertemperatur" wird insbesondere die Temperatur an einem Punkt oder Bereich im Inneren der Schichtfolge, insbesondere an dem geometrischen Mittelpunkt der Schichtfolge, beim Tiefziehen beziehungsweise Erwärmen der Schichtfolge verstanden.

Hierdurch ist es insbesondere möglich, dass das Oberflächenrelief bevorzugt in der ersten Oberfläche des Substrats ausgebildet wird, wobei das Oberflächenrelief vorzugsweise durch die Formgebung, insbesondere durch Kontur und/oder Höhenrelief, der ein oder mehreren Sensorfolien ausgebildet wird.

Weiter wird hierdurch vorzugsweise erreicht, dass die bisherige zusätzliche Kennzeichnung des Sensorbereichs, beispielsweise durch nachträglich aufgebrachte Piktogramme, durch optische und/oder haptische Oberflächenreliefs ersetzt wird, welche auf der ersten Oberfläche des Substrats ausgeformt werden beziehungsweise sind. Eine solche neuartige Kennzeichnung erfordert insbesondere keinen zusätzlichen Verfahrensschritt, da diese durch die ein oder mehreren Sensorfolien und/oder weiteren Folien, Schichten, Labels, insbesondere Kunststofflabels, und/oder Elemente, insbesondere funktionale Elemente, bevorzugt 3D-Elemente, beim Thermoformen abgeformt werden und derart in das Oberflächendesign des resultierenden Mehrschichtkörpers integriert werden können.

Weiter entstehen hierbei vorzugsweise derart neue Designfreiheiten, dass die ein oder mehreren Sensorfolien und/oder weiteren Folien, Schichten, Labels, insbesondere Kunststofflabels, und/oder Elemente, insbesondere funktionale Elemente, bevorzugt 3D-Elemente, designharmonisch in den Mehrschichtkörper integriert werden können.

Weiter wird hierdurch vorzugsweise erreicht, dass im Gegensatz zu den bisherigen zusätzlichen Kennzeichnungen des Sensorbereichs, beispielsweise durch nachträglich aufgebrachte Piktogramme, die mit der Zeit "abgegriffen" beziehungsweise abgenutzt werden, die erfindungsgemäße Kennzeichnung beständiger gegen derartige Langzeitbelastungen bzw. Langzeitbenutzung ist.

Ferner wird hierdurch insbesondere erreicht, dass die Position und geometrische Ausdehnung des "aktiven" Sensorbereichs, insbesondere in der durch den Mehrschichtkörper aufgespannten Ebene und/oder insbesondere senkrecht zu dieser Ebene, haptisch und/oder optisch erfassbar wird beziehungsweise ist. Der unerwünschte Effekt des Durchzeichnens der ein oder mehreren Sensorfolien und/oder oder weiteren Folien, Schichten, Labels, insbesondere Kunststofflabels, und/oder Elemente, insbesondere funktionale Elemente, bevorzugt 3D-Elemente, wird hierbei bevorzugt verwendet, um zu vermeiden, zusätzliche "virtuelle", nachträglich aufgebrachte Bedienelemente wie Tasten oder Schalter als Dekor, wie beispielsweise als nachträglich aufgebrachte Piktogramme, aufbringen zu müssen.

Bisher werden Sensoren insbesondere hinter tiefgezogene Teile geklebt, so dass der Endkunde und/oder Nutzer speziell auf die sensorische Funktionalität hingewiesen werden muss, da diese Funktionalität ansonsten unerkannt bleiben würde. Der Nutzer und/oder Endkunde wird regelmäßig mittels separater, nachträglich aufgebrachter Piktogramme auf die sensorische Funktionalität aufmerksam gemacht, welche sich vorzugsweise an den entsprechenden Positionen auf der dem Nutzer zugewandten Seite des Bauteiles befinden. Insbesondere erfordert dies in der Regel einen zusätzlichen Verfahrensschritt zur Aufbringung beziehungsweise Erzeugung derartiger Piktogramme.

Vorzugsweise ist die Schichtfolge, insbesondere eine Schichtfolge umfassend ein oder mehrere Dekorfolien, aus ein oder mehreren PC und/oder ein oder mehreren PMMA ausgebildet.

Es ist weiter möglich, dass die Schichtfolge, insbesondere die Schichtfolge umfassend die ein oder mehreren Dekorfolien, vorzugsweise nicht aus glasfasergefüllten oder kunststofffasergefüllten PC und/oder PMMA gebildet werden.

Weiter ist es möglich, dass das Substrat, insbesondere das Substrat umfassend die ein oder mehreren Dekorfolien, insbesondere nicht aus Blends bzw. Mischungen von ABS und/oder PC und/oder reinem ABS und/oder reinem Polyamid und/oder dessen Blends bzw. Mischungen gebildet werden.

Vorzugsweise wird beim Thermoformen der Schichtfolge das Oberflächenrelief mittels Laminieren der Schichtfolge ausgebildet, wobei die Laminiertemperatur vorzugsweise zwischen 80°C und 300°C, insbesondere zwischen 100°C und 260°C, bevorzugt zwischen 120°C und 240°C, liegt, wobei insbesondere die Laminiergeschwindigkeit zwischen 0,125 m/min und 10 m/min, bevorzugt zwischen 0,25 m/min und 10 m/min, besonders bevorzugt zwischen 0,5 m/min und 10 m/min, und/oder bevorzugt zwischen 0,25 m/min und 7,5 m/min, liegt.

Es hat sich als vorteilhaft erwiesen, dass als Substrat vorzugsweise ein Substrat bereitgestellt wird, welches vorzugsweise vor dem Thermoformen eine Schichtdicke, insbesondere eine mittlere Schichtdicke, zwischen 125 µm und 3500 µm, insbesondere zwischen 400 µm und 1500 µm, bevorzugt zwischen 600 µm und 1100 µm, aufweist und/oder dass als Substrat vorzugsweise ein Substrat bereitgestellt wird, welches vorzugsweise nach dem Thermoformen eine Schichtdicke, insbesondere eine mittlere Schichtdicke, zwischen 125 µm und 3500 µm, insbesondere zwischen 400 µm und 1500 µm, bevorzugt zwischen 600 µm und 1100 µm, aufweist.

Vorzugsweise besteht das Substrat, insbesondere das Substrat aufweisend die ein oder mehreren Dekorschichten, aus einem Material, bevorzugt einem massiven Material, ohne Lufteinschlüsse.

Es hat sich als vorteilhaft erwiesen, falls das Substrat, insbesondere das Substrat aufweisend die ein oder mehreren Dekorschichten, nicht aus Schaum und/oder einem schaumartigen Material oder Stoff, da beispielsweise das mechanische Verhalten eines Schaums und/oder eines schaumartigen Materials unbekannt ist oder nur mit einem großen Aufwand bestimmbar ist und die im Schaum oder dem schaumartigen Material eingeschlossenen beziehungsweise enthaltenen Einschlüsse, insbesondere Lufteinschlüsse, die elektrischen Eigenschaften, insbesondere die elektrische Leitfähigkeit die Kapazität, der ein oder mehreren Sensorfolien negativ beeinflussen.

Weiter ist es möglich, dass als Substrat vorzugsweise ein Substrat aufweisend eine erste Schmelztemperatur und als Sensorfolie vorzugsweise eine Sensorfolie aufweisend eine zweite Schmelztemperatur bereitgestellt wird, wobei insbesondere die erste Schmelztemperatur kleiner ist, bevorzugt um den Faktor 1 bis 3 kleiner ist, weiter bevorzugt um den Faktor 1,3 bis 2,5 kleiner ist, als die zweite Schmelztemperatur, wobei das Substrat vorzugsweise aus einem biaxial gereckten PET beziehungsweise Polyethylenterephthalat besteht.

Unter "Schmelztemperatur" oder Schmelzpunkt wird hierbei insbesondere die Temperatur verstanden, bei welcher ein Material und/oder Stoff schmilzt und in Folge dessen vorzugsweise von einem festen Aggregatzustand in einen flüssigen Aggregatzustand übergeht.

Es ist auch möglich, dass als Substrat vorzugsweise ein Substrat aufweisend eine erste Erweichungstemperatur und als Sensorfolie vorzugsweise eine Sensorfolie aufweisend eine zweite Erweichungstemperatur bereitgestellt wird, wobei insbesondere die erste Erweichungstemperatur kleiner ist, bevorzugt um den Faktor 1 bis 3 kleiner ist, weiter bevorzugt um den Faktor 1,3 bis 2,8 kleiner ist, als die zweite Erweichungstemperatur.

Unter "Erweichungstemperatur" oder Erweichungspunkt wird hierbei insbesondere die Temperatur verstanden, bei der ein Material und/oder ein Stoff, vorzugsweise unter vorbestimmten Bedingungen, zu fließen beginnt. Hierbei wird das Material und/oder der Stoff insbesondere derart erwärmt, bis dieses beziehungsweise dieser vom festen Aggregatzustand in den flüssigen Aggregatzustand übergeht. Unter Erweichungstemperatur wird hierbei insbesondere die Vicat-Erweichungstemperatur (VST = Vicat softening temperature) verstanden, vorzugsweise gemessen mit Prüfkraft B, 50 N, also bevorzugt VSTB.

Es hat sich als vorteilhaft erwiesen, dass die variablen Verfahrensparameter, wie beispielsweise Temperatur und/oder Druck, insbesondere mechanischer Druck, des Thermoformprozesses vorzugsweise derart vorbestimmt werden, dass die Erweichung beziehungsweise Plastifizierung des Substrats, insbesondere des Substrats umfassend ein oder mehrere Dekorfolien, bei geringeren Temperaturen, insbesondere Erweichungstemperaturen und/oder Schmelztemperaturen, und/oder Drücken, insbesondere mechanischen Drücken, eintreten als die Erweichung beziehungsweise Plastifizierung der ein oder mehreren Sensorfolien.

Versuche haben gezeigt, dass hierbei die Schmelztemperatur des Substrats, insbesondere des Substrats umfassend die ein oder mehreren Dekorfolien, vorzugsweise niedriger als die Schmelztemperatur der ein oder mehreren Sensorfolien ist. So liegt beispielsweise die Schmelztemperatur eines Substrats, insbesondere eines Substrats umfassend ein oder mehrere Dekorfolien, bestehend aus PC zwischen 220°C und 230°C und/oder beispielsweise die Schmelztemperatur ein oder mehrerer Sensorfolien bestehend aus PET bei 255°C, insbesondere zwischen 250°C und 260°C.

Weiter haben Versuche gezeigt, dass die Änderung der Höhe des bereitgestellten Substrats mit auflaminiertem Sensor, vorzugsweise eines Substrats mit auflaminiertem Sensors mit einer vorbestimmten Schichtdicke, durch das Thermoformen insbesondere einen funktionalen Zusammenhang zur Schichtdicke der aufgebrachten Sensorfolie aufweist, wobei dieser funktionale Zusammenhang insbesondere ein Polynom zweiten Grades der Form y = a·x² + b·x + c, bevorzugt mit den Parametern a = 0,0035; b = 0,4832, c = 38,19; und vorzugsweise den Variablen x = Schichtdicke des aufgebrachten Sensorlabels, y = Höhe der Ausformung am Ort des Sensorlabels im Vergleich zu der übrigen Substratfläche ohne Sensorlabel nach dem Thermoformen, ist.

Hierbei hat sich gezeigt, dass die ein oder mehreren Sensorfolien insbesondere als Wärmeisolator beim Thermoformen, vorzugsweise beim Tiefziehen, wirken. Beim Thermoformen der Schichtfolge wird die Schichtfolge vorzugsweise aus Richtung von den zweiten Oberflächen der ein oder mehreren Sensorfolien beziehungsweise von der zweiten Oberfläche des Substrats her erwärmt, so dass der Wärmefluss in das Substrat, insbesondere das Substrat umfassend die ein oder mehreren Dekorfolien, in den ein oder mehreren Bereichen, in welchen die ein oder mehreren Sensorfolien auf der ersten Oberfläche der ein oder mehreren Sensorfolien aufliegen, vorzugsweise kleiner ist, als in den Bereichen, in welchen die ein oder mehreren Sensorfolien nicht auf der ersten Oberfläche der ein oder mehreren Sensorfolien aufliegen.

Vorzugsweise weist die Schichtfolge vor dem Thermoformen eine Krümmung mit einem minimalen oder maximalen Krümmungsradius und/oder mit einem mittleren Krümmungsradius von nicht kleiner als 1,5 mm, bevorzugt von nicht kleiner als 1 mm auf.

Unter "Krümmung" wird insbesondere eine lokale Abweichung einer Kurve von einer Geraden verstanden. Unter der Krümmung einer Kurve wird insbesondere eine Richtungsänderung pro durchlaufene Länge und/oder Strecke eines genügend kurzen Kurvenstücks beziehungsweise Kurvenverlaufs verstanden. Die Krümmung einer Geraden ist überall gleich Null. Ein Kreis mit einem Radius r hat überall die gleiche Krümmung, nämlich 1/r. Bei den meisten Kurven ändert sich die Krümmung von Kurvenpunkt zu Kurvenpunkt, insbesondere ändert sich die Krümmung von Kurvenpunkt zu Kurvenpunkt kontinuierlich, so dass die Kurven insbesondere keine Knicke und/oder Unstetigkeitsstellen aufweisen. Die Krümmung einer Kurve in einem Punkt P gibt somit an, wie stark die Kurve in der unmittelbaren Umgebung des Punktes P von einer Geraden abweicht. Den Betrag der Krümmung bezeichnet man als Krümmungsradius und dieser entspricht dem Kehrwert des Betrages eines lokalen Radiusvektors. Der Krümmungsradius ist der Radius des Kreises, der in einer lokalen Umgebung des Berühr- und/oder Tangentialpunkts P einer Kurve die beste Näherung darstellt.

Bevorzugt wird die Schichtfolge beim Thermoformen derart modifiziert, dass die Schichtfolge vorzugsweise nach dem Thermoformen eine Krümmung mit einem minimalen oder maximalen Krümmungsradius und/oder mit einem mittleren Krümmungsradius von nicht kleiner als 1,5 mm, bevorzugt von nicht kleiner als 1 mm, aufweist.

Es ist vorzugsweise dennoch möglich, optische Kennzeichnungen für den Nutzer in Form von in Dekorschichten eingebrachten oder aufgebrachten Piktogrammen derart in den Mehrschichtkörper zu integrieren, dass diese Piktogramme in dem Sensorbereich angeordnet sind oder den Sensorbereich überlappen und/oder außerhalb des Sensorbereiches angeordnet sind.

Weiter ist es möglich, dass als Substrat vorzugsweise ein Substrat und/oder dass als zumindest eine Sensorfolie vorzugsweise zumindest eine Sensorfolie bereitgestellt wird, welche ein oder mehrere Dekorschichten umfassen, wobei insbesondere die Dekorschichten in ein oder mehreren Bereichen, bevorzugt in dem Sensorbereich, ein oder mehrere Piktogramme aufweisen. Vorzugsweise überlagern sich ein oder mehrere Piktogramme der ein oder mehreren Piktogramme oder ergänzen sich zu einem Gesamtpiktogramm.

Insbesondere sind ein oder mehrere der Piktogramme der ein oder mehreren Piktogramme oder das Gesamtpiktogramm jeweils als ein Motiv, ein graphisch gestalteter Umriss, eine figürliche Darstellung, ein Bild, ein visuell erkennbares Bild, ein Symbol, ein Logo, ein Portrait, ein Muster, ein alphanumerisches Zeichen, ein Text und/oder dergleichen ausgebildet.

Es ist auch möglich, dass in der ersten Oberfläche des Substrats ausgebildete Oberflächenrelief derart auszubilden, dass dieses ein oder mehrere Piktogramme bildet, welche optisch und/oder haptisch, insbesondere mittels einer menschlichen Fingerkuppe oder Daumenkuppe, erfassbar sind.

Es ist möglich, dass das Substrat insbesondere ein oder mehrere transparente Bereiche aufweist, wobei insbesondere der Transmissionsgrad des Substrats zwischen der ersten Oberfläche des Substrats und der zweiten Oberfläche des Substrats in den ein oder mehreren transparenten Bereichen in einem für das menschliche Auge sichtbaren Wellenlängenbereich größer als 1%, bevorzugt größer als 2%, weiter bevorzugt größer als 4%, und/oder kleiner als 99%, bevorzugt kleiner als 95%, weiter bevorzugt kleiner als 92%, ist.

Weiter ist es möglich, dass ein oder mehrere Dekorfolien der ein oder mehreren Dekorfolien insbesondere pigmentierte und/oder eingefärbte und/oder metallisierte und/oder teilmetallisierte Schichten aufweisen. Vorzugsweise werden teiltransparente oder transparente Dekorfolien mit transparenten Sensorfolien kombiniert, um insbesondere bei Betrachtung des Mehrschichtkörpers von der ersten Oberfläche her zumindest bereichsweise einen Transmissionsgrad oder Lichtdurchlässigkeit und/oder einen gesteuerten und/oder vorbestimmte Emissionsgrad bereitzustellen.

Vorzugsweise sind die transparenten Bereiche klar transparent, das heißt insbesondere nicht eingefärbt und/oder weisen die Farbe des Substrats auf, oder eingefärbt, mit Füllern mattiert, und/oder farbig, oder sind insbesondere eine Kombination, insbesondere eine bereichsweise Kombination bereichsweise unterschiedlicher Transparenzen und/oder Einfärbungen, der vorstehenden Eigenschaften. Derartige klar transparente Bereiche umfassen insbesondere einen oder mehrere Bereiche des Sensorbereichs oder den gesamten Sensorbereich.

Es ist möglich, dass der Mehrschichtkörper transparente Bereiche aufweist, welche sich über alle Schichten erstrecken, so dass beispielsweise eine Lichtquelle durch den Mehrschichtkörper im Durchlicht hindurch durch einen Beobachter erfasst werden kann.

Insbesondere liegen die Glanzgrade der ein oder mehreren Dekorschichten oder des Substrats oder der ein oder mehreren Sensorfolien zwischen 2 @60°, insbesondere 2 GU bei einem Messwinkel von 60°, und 160 @60°, insbesondere 160 GU bei einem Messwinkel von 60°, wobei unter "GU" insbesondere "gloss units" bzw. Glanzeinheiten zu verstehen sind.

Es ist weiter möglich, ein oder mehrere oder alle Dekorfolien, Piktogramme, Kunststofflabels, funktionalen Elemente, transparente Bereiche und/oder Sensorfolien im Register zueinander oder zu ein oder mehreren oder allen Dekorfolien, Piktogramme, Kunststofflabels, funktionalen Elementen, transparenten Bereichen und/oder Sensorfolien, insbesondere zur Ausbildung eines registrierten Gesamtdesigns, anzuordnen.

Unter Register oder Passer beziehungsweise Registergenauigkeit oder Passergenauigkeit ist eine Lagegenauigkeit zweier oder mehrerer Elemente und/oder Schichten zueinander zu verstehen. Dabei soll sich die Registergenauigkeit innerhalb einer vorgegebenen Toleranz bewegen und dabei möglichst gering sein. Gleichzeitig ist die Registergenauigkeit von mehreren Elementen, Teilbereichen, insbesondere ein oder mehrerer ersten Teilbereichen, Folien und/oder Schichten zueinander ein wichtiges Merkmal, um die Prozesssicherheit zu erhöhen. Die lagegenaue Positionierung erfolgt dabei insbesondere mittels Markierungen, insbesondere mittels sensorisch, vorzugsweise optisch detektierbarer Passermarken oder Registermarken. Diese Markierungen, insbesondere Passermarken oder Registermarken, stellen dabei vorzugsweise entweder spezielle separate Elemente oder Bereiche oder Schichten dar oder sind vorzugsweise selbst Teil der zu positionierenden Elemente oder Bereiche oder Schichten.

Vorzugsweise werden die ein oder mehreren Sensorfolien mittels ein oder mehrerer Schablonen an der Ausrichtung und/oder Positionierung der ein oder mehreren Dekorschichten ausgerichtet. Die Sensorfolien werden insbesondere an in den Dekorschichten vorhandenen Registermarken ausgerichtet und bevorzugt derart designabhängig positioniert. Weiter ist insbesondere eine Ausrichtung der Sensorfolien an Piktogrammen der Dekorschichten möglich, welche vorzugsweise separat und/oder rückseitig und/oder von Seiten der zweiten Oberfläche des Substrats aufgedruckt sind und/oder in den Dekorschichten schon vorhanden sind, wie beispielsweise geschlossene geometrische Piktogramme, insbesondere Kreise und/oder Vielecke.

Es ist möglich, dass als Substrat vorzugsweise ein Substrat bereitgestellt wird, welches ein oder mehrere Schichten umfasst, ausgewählt aus: Schichten umfassend Pigmente, Farbschichten, Metallschichten, metallisierte Schichten, insbesondere teilmetallisierte Schichten, transparente Schichten, transluzente Schichten, opake Schichten.

Erfindungsgemäß ist vorgesehen, dass die ein oder mehreren Sensorfolien jeweils in dem mindestens einen Sensorbereich ein oder mehrere Sensorelemente, insbesondere kapazitive und/oder resistive Sensorelemente, aufweisen und dass die ein oder mehreren Sensorfolien jeweils zumindest einen Anschlussbereich und/oder Kontaktbereich zur Kontaktierung von ein oder mehreren der Sensorelemente aufweist.

Es ist auch möglich, dass als Sensorfolie vorzugsweise eine Sensorfolie bereitgestellt wird, welche insbesondere eine Basisfolie und ein oder mehrere auf die Basisfolie aufgebrachte und/oder eingebrachte elektrisch leitfähige Schichten aufweist, insbesondere bestehend aus einem metallischen Material.

Vorzugsweise bilden die ein oder mehreren elektrisch leitfähigen Schichten in dem Sensorbereich ein oder mehrere Sensorelektroden zur Ausbildung ein oder mehrerer der Sensorelemente aus, insbesondere zur Ausbildung ein oder mehrerer kapazitiver Sensorelemente und/oder ein oder mehrerer resistiver Sensorelemente und/oder dass die ein oder mehreren elektrisch leitfähigen Schichten vorzugsweise in dem Anschlussbereich und/oder Kontaktbereich ein oder mehrere Kontaktelektroden zur Kontaktierung, insbesondere zur elektrischen Kontaktierung, der ein oder mehreren Sensorelektroden aufweisen.

Insbesondere werden die ein oder mehreren Sensorelektroden, insbesondere ein oder mehrere aktive Sensorbereiche der ein oder mehreren Sensorelektroden, für das menschliche Auge eine Transparenz mit einem Transmissionsgrad von mehr als 60%, insbesondere von mehr als 80%, aufweisen und/oder jeweils von einem Netz von dünnen Leiterbahnen mit einer Leiterbahnbreite zwischen 3 µm und 60 µm, insbesondere zwischen 4 µm und 60 µm, insbesondere bevorzugt zwischen 4 µm und 50 µm, gebildet.

Insbesondere wird als Sensorfolie eine Sensorfolie bereitgestellt, welche vorzugsweise eine Schichtdicke zwischen 10 µm und 300 µm, insbesondere zwischen 50 µm und 200 µm, bevorzugt zwischen 60 µm und 150 µm, aufweist.

Es hat sich als vorteilhaft erwiesen, dass die Schichtfolge vorzugsweise zumindest im Sensorbereich eine Kapazität von maximal 200 pF, bevorzugt maximal 150 pF, weiter bevorzugt maximal 100 pF, aufweist. Hierdurch wird insbesondere eine Touchfunktion in dem Sensorbereich, vorzugsweise mittels einer menschlichen Fingerkuppe und/oder einer menschlichen Daumenkuppe, ermöglicht.

Insbesondere ist es auch möglich, dass Sensorzellen ohne Tailzuleitung, vorzugsweise kleine Sensorzellen ohne Tailzuleitung, weiter bevorzugt direkt kontaktierbare Sensorzellen, eine Kapazität von maximal 7pF, insbesondere maximal 5pF, insbesondere bevorzugt maximal 3pF, aufweisen und/oder Sensoren mit Tail, insbesondere große Sensoren mit Tail, eine Kapazität von 12pF bis 70pF, aufweisen, vorzugsweise falls diese eingespritzt sind, wobei die Kapazitäten bevorzugt noch höher ausfallen, falls die Dekorschichten leicht leitfähig sind.

Es ist möglich, dass das einschichtige oder mehrschichtige Substrat optional einseitig oder beidseitig bedruckt ist. Um die Touchfunktion beziehungsweise die Sensorfunktion der aufgebrachten Sensorfolie oder Sensorfolien zu ermöglichen, ist es vorteilhaft, dass der Mehrschichtkörper insbesondere eine Kapazität von maximal 200 pF aufweist, wobei in dem Messwert die Eigenkapazität eines Messgerätes, insbesondere eines Messkopfes vorzugsweise berücksichtigt wird. Bei dem Messgerät kann es sich beispielsweise um einen sogenannten "self-capacitance"-Messkopf handeln, der die Eigenkapazität einer an den Messkopf angeschlossenen Struktur misst.

Weiter ist es vorteilhaft, wenn die um das Messgerät korrigierten Werte vorzugsweise eine maximale Kapazität in Höhe von 150 pF aufweisen, um insbesondere eine ausreichende Sensorsensibilität und/oder Sensorfunktionalität durch die Schichten des Mehrschichtkörpers zu ermöglichen.

Vorzugsweise wird bei dem Messverfahren eine kapazitive Prüfung beziehungsweise Messung eines "ohmsch" angeschlossenen Folienprüflings durchgeführt. Der Folienprüfling, beispielsweise ein Touchsensor, weist insbesondere Anschlussbereiche und/oder Kontaktbereiche zur Kontaktierung auf, welche bevorzugt mittels dünner Leiterbahnen an Touchflächen beziehungsweise Sensorelektroden angeschlossen sind. Die Touchflächen beziehungsweise Sensorelektroden bilden hierbei eine erste Hälfte und eine zweite Hälfte eines Koplanar-Kondensators.

Weiter umfasst der Messkopf vorzugsweise Kontaktpins zur ohmschen Kontaktierung, einen Schwingkreischip, welcher insbesondere je nach angeschlossener Kapazität eine bestimmte Frequenz aufweist, und eine Auswerteelektronik, welche bevorzugt die ausgegebene Frequenz bestimmt und insbesondere an eine angeschlossene Recheneinheit übermittelt. Vorzugsweise ist die hierdurch ermittelte Frequenz demnach ein Maß für die mit dem Messkopf zusätzlich verbundene Kapazität. Die zusätzlich verbundene Kapazität ist insbesondere die Kapazität des angeschlossenen Koplanar-Kondensators beziehungsweise des Touchsensors.

Die Kapazität des Koplanar-Kondensators ist vorzugsweise wiederum abhängig von der Art der vorhandenen Koplanarplatten, beispielsweise deren Fläche, Form und/oder Abstand, als insbesondere auch von dielektrischen beziehungsweise leitfähigen Umgebungen und/oder Schichten, oberhalb als auch unterhalb der jeweiligen Koplanarplatten. Nähert man sich nun dem Koplanar-Kondensator beziehungsweise dem Touchsensor mit einem leitfähigen Gegenstand, wie beispielsweise einem menschlichen Finger, ändert dieser vorzugsweise seine messbare Kapazität in Abhängigkeit des Abstandes zwischen dem leitfähigen Gegenstand und dem Koplanar-Kondensator beziehungsweise Touchsensor. Hierdurch wird insbesondere die Funktionsfähigkeit, insbesondere die Fehlerfreiheit, des Koplanar-Kondensators beziehungsweise des Touchsensors geprüft. Vorzugsweise genügt schon eine nicht "betouchte" Kapazität als Funktionskriterium, wenn ein bestimmter Mindestwert erreicht wird.

Vorzugsweise wird für die Bestimmung der dielektrischen beziehungsweise leitfähigen Eigenschaften einer gedruckten Schicht ein, insbesondere bezogen auf die Bauform, gleichartiger Sensor verwendet. Hierbei werden bevorzugt zunächst Vergleichsmessungen an bekannten Materialien durchgeführt, wie beispielsweise eine 1 mm dicke PMMA-Platte als nicht leitfähiges Material und beispielsweise eine metallisierte Folie oder Karbon-Schicht mit bekannten Flächenwiderständen, insbesondere als vollkommen leitfähiges Material. Hochohmig leitfähige gedruckte Schichten liegen vorzugsweise dann mit ihren Messwerten zwischen diesen beiden Materialien, wodurch insbesondere ein Rückschluss auf deren Leitfähigkeit und damit auf deren Touch-Störfähigkeit, möglich wird.

Es ist möglich, dass der Sensorbereich mindestens einen zumindest teilweise den Sensorbereich umschließenden Randbereich, insbesondere einen ringförmigen Randbereich, insbesondere einen kreisringförmigen Randbereich, umfasst, in welchem die ein oder mehreren Sensorelektroden nicht vorhanden sind, wobei bevorzugt der Randbereich den Umfang des Sensorbereichs von außen oder von innen umschließt und/oder dem Umfang des Sensorbereichs folgt und/oder den Umfang des Sensorbereichs vollständig oder teilweise überlappt.

Vorzugsweise befindet sich der Sensorbereich beziehungsweise der aktive Touchbereich lediglich innerhalb des Oberflächenreliefs und insbesondere nicht auf dem Oberflächenrelief selber.

Weiter ist es möglich, dass der Randbereich vorzugsweise eine Breite, insbesondere eine radiale Breite, zwischen 0,25 mm und 5 mm, bevorzugt zwischen 0,5 mm und 5 mm, aufweist und/oder dass der ringförmige Randbereich, insbesondere der kreisringförmige Randbereich, vorzugsweise eine Ringbreite zwischen 0,25 mm und 5 mm, bevorzugt zwischen 0,5 mm und 2 mm, aufweist. Bevorzugt weist der Randbereich keine zur Kontaktierung von ein oder mehreren im Sensorbereich angeordneten Sensorelemente auf.

Es ist auch möglich, dass das auf der ersten Oberfläche des Substrats ausgebildete Oberflächenrelief vorzugsweise haptisch und/oder optisch erfassbar ist und/oder dass das auf der ersten Oberfläche des Substrats ausgebildete Oberflächenrelief vorzugsweise haptisch aber nicht optisch erfassbar ist oder vorzugsweise optisch aber nicht haptisch erfassbar ist.

Insbesondere haben Versuche gezeigt, dass das auf der ersten Oberfläche des Substrats ausgebildete Oberflächenrelief eine maximale Höhendifferenz und/oder eine mittlere Höhendifferenz zwischen einem lokalen Minimum des Oberflächenreliefs oder einem globalen Minimum des Oberflächenreliefs und einem lokalen Maximum des Oberflächenreliefs oder einem globalen Maximum des Oberflächenreliefs auf, welche kleiner als 5000 µm, insbesondere kleiner als 2000 µm, bevorzugt kleiner als 1000 µm, ist.

Vorzugsweise weist das auf der ersten Oberfläche des Substrats ausgebildete Oberflächenrelief eine maximale Höhendifferenz und/oder eine mittlere Höhendifferenz zwischen einem lokalen Minimum des Oberflächenreliefs oder einem globalen Minimum des Oberflächenreliefs und einem lokalen Maximum des Oberflächenreliefs oder einem globalen Maximum des Oberflächenreliefs auf, welche größer gleich 50 µm, insbesondere größer 25 µm, bevorzugt größer 10 µm, ist.

Es ist möglich, dass das auf der ersten Oberfläche des Substrats ausgebildete Oberflächenrelief vorzugsweise als Braille-Schrift, insbesondere als ein oder mehrere Buchstaben, ein oder mehrere Zahlen, ein oder mehrere Wörter, und/oder ein oder mehrere Sätze in Braille-Schrift, ausgebildet ist.

Im Folgenden werden bevorzugte Ausführungsformen des Mehrschichtkörpers genannt.

Vorzugsweise weisen die ein oder mehreren Sensorfolien in dem Sensorbereich, insbesondere bereichsweise oder vollflächig, ein oder mehrere Folien und/oder ein oder mehrere Schichten auf, ausgewählt aus: Basisfolie, Kunststofflabel, funktionale Elemente, insbesondere Lichtleiter, Dekorschicht, elektrisch leitfähige Schicht, insbesondere metallische Schicht, Kleberschicht, Haftvermittlerschicht, wobei die ein oder mehreren elektrisch leitfähigen Schichten jeweils ein oder mehrere Sensorelektroden und/oder ein oder mehrere Kontaktelektroden aufweisen.

Es ist möglich, dass die ein oder mehreren Sensorfolien in dem Sensorbereich ein oder mehrere Sensorelektroden und/oder ein oder mehrere Kontaktelektroden aufweisen, wobei die Sensorelektroden und/oder die Kontaktelektroden, insbesondere projiziert auf die durch die erste Oberfläche der zumindest einen Sensorfolie aufgespannten Ebene, nebeneinander angeordnet sind und/oder einander nicht überlappen und/oder sich, insbesondere bei Betrachtung parallel zu einer von der Ebene des Mehrschichtkörper definierten Flächennormalen, ein oder mehrere Sensorelektroden der ein oder mehreren Sensorelektroden mit ein oder mehreren Kontaktelektroden der ein oder mehreren Kontaktelektroden überlappen.

Weiter ist es möglich, dass das Oberflächenrelief, insbesondere projiziert auf die durch die erste Oberfläche der zumindest einen Sensorfolie aufgespannten Ebene, zumindest teilweise aus ein oder mehreren geraden, gekrümmten, kreisbogenförmigen und/oder kreisförmigen Erhebungen und/oder Vertiefungen, insbesondere in dem Sensorbereich, zusammengesetzt ist.

Es ist auch möglich, dass das Oberflächenrelief, insbesondere projiziert auf die durch die erste Oberfläche der zumindest einen Sensorfolie aufgespannten Ebene, zumindest teilweise mit ein oder mehreren linearen, spiralförmigen und/oder elliptischen Erhebungen und/oder Vertiefungen, insbesondere in dem Sensorbereich, ausgebildet ist.

Weiter ist es auch möglich, dass das Oberflächenrelief, insbesondere in dem Sensorbereich, derart ausgebildet ist, dass ein oder mehrere Erhebungen der ein oder mehreren Erhebungen und/oder ein oder mehrere Vertiefungen der ein oder mehreren Vertiefungen, insbesondere in dem Sensorbereich, jeweils einen konstanten oder variierenden Flankenwinkel und/oder eine konstante oder variierende Breite und/oder eine konstante oder variierende Höhe beziehungsweise Tiefe und/oder eine konstante oder variierende Krümmung aufweisen.

Insbesondere wird die Form ein oder mehrerer Erhebungen der ein oder mehreren Erhebungen und/oder ein oder mehrere Vertiefungen der ein oder mehreren Vertiefungen, insbesondere projiziert auf die durch erste Oberfläche der zumindest einen Sensorfolie aufgespannten Ebene, bevorzugt in dem Sensorbereich, jeweils ausgewählt oder kombiniert aus: Linie, Gerade, Motiv, Bild, Dreieck, Welle, Viereck, Vieleck, gekrümmte Linie, Kreis, Oval, Trapez, Parallelogramm, Raute, Kreuz, Sichel, Aststruktur, Stern, Ellipse, Fraktalmuster, Zufallsmuster, Pseudozufallsmuster, wobei sich die ein oder mehreren Erhebungen und/oder die ein oder mehreren Vertiefungen insbesondere überlagern und/oder ergänzen.

Vorzugsweise werden eine oder mehrere Erhebungen der ein oder mehreren Erhebungen und/oder ein oder mehrere Vertiefungen der ein oder mehreren Vertiefungen über den Verlauf, insbesondere in der durch die erste Oberfläche der zumindest einen Sensorfolie aufgespannten Ebene, der jeweiligen Erhebungen und/oder Vertiefungen derart ausgebildet, dass eine oder mehrere der Höhen der Erhebungen und/oder ein oder mehrere Tiefen der Vertiefungen, insbesondere senkrecht zu der durch die zweite Oberfläche des Substrats aufgespannten Ebene, nicht oder zumindest abschnittsweise eine Variation aufweisen, wobei die Variation ausgewählt wird aus: wellenförmig, symmetrisch, asymmetrisch, periodisch, aperiodisch, diskret, kontinuierlich, gestuft.

Im Folgenden wird die Erfindung anhand von mehreren Ausführungsbeispielen unter Zuhilfenahme der beiliegenden Zeichnungen beispielhaft erläutert. Dabei zeigen:
- Fig. 1: zeigt eine schematische Darstellung einer Schichtfolge
- Fig. 2: zeigt eine schematische Darstellung eines Mehrschichtkörpers
- Fig. 3: zeigt eine schematische Darstellung einer Schichtfolge
- Fig. 4: zeigt eine schematische Darstellung eines Mehrschichtkörpers
- Fig. 5: zeigt eine schematische Darstellung eines Diagramms
- Fig. 6: zeigt eine schematische Darstellung eines Mehrschichtkörpers
- Fig. 7: zeigt eine schematische Darstellung eines Mehrschichtkörpers
- Fig. 8: zeigt eine schematische Darstellung eines Mehrschichtkörpers
- Fig. 9: zeigt eine schematische Darstellung eines Mehrschichtkörpers
- Fig. 10: zeigt eine schematische Darstellung eines Mehrschichtkörpers
- Fig. 11: zeigt eine schematische Darstellung eines Mehrschichtkörpers
- Fig. 12: zeigt eine schematische Darstellung einer Sensorfolie
- Fig. 13: zeigt eine schematische Darstellung einer Sensorfolie
- Fig. 14: zeigt eine schematische Darstellung einer Sensorfolie
- Fig. 15: zeigt eine schematische Darstellung einer Sensorfolie
- Fig. 16: zeigt eine schematische Darstellung eines Substrats
- Fig. 17: zeigt eine schematische Darstellung einer Schichtfolge
- Fig. 18: zeigt eine schematische Darstellung eines Mehrschichtkörpers
- Fig. 19: zeigt eine schematische Darstellung eines Mehrschichtkörpers
- Fig. 20: zeigt eine schematische Darstellung eines Mehrschichtkörpers

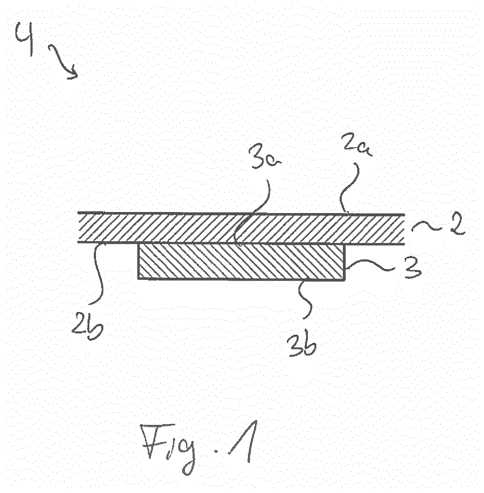

Fig. 1 zeigt eine Schichtfolge 4 umfassend ein Substrat 2 und eine Sensorfolie 3 im Querschnitt. Die Sensorfolie 3 liegt auf dem Substrat 2 auf, wobei die erste Oberfläche 3a der Sensorfolie 3 auf der zweiten Oberfläche des Substrats 2 aufliegt.

Weiter ist es möglich, dass als Substrat 2 insbesondere ein Substrat 2 aufweisend eine erste Schmelztemperatur und als Sensorfolie 3 eine Sensorfolie 3 aufweisend eine zweite Schmelztemperatur bereitgestellt wird, wobei insbesondere die erste Schmelztemperatur kleiner ist, bevorzugt um den Faktor 1 bis 3 kleiner ist, weiter bevorzugt um den Faktor 1,3 bis 2,5 kleiner ist, als die zweite Schmelztemperatur.

Insbesondere wird als Substrat 2 ein Substrat 2 aufweisend eine erste Erweichungstemperatur und als Sensorfolie 3 eine Sensorfolie 3 aufweisend eine zweite Erweichungstemperatur bereitgestellt wird, wobei insbesondere die erste Erweichungstemperatur kleiner ist, bevorzugt um den Faktor 1 bis 3 kleiner ist, weiter bevorzugt um den Faktor 1,3 bis 2,8 kleiner ist, als die zweite Erweichungstemperatur.

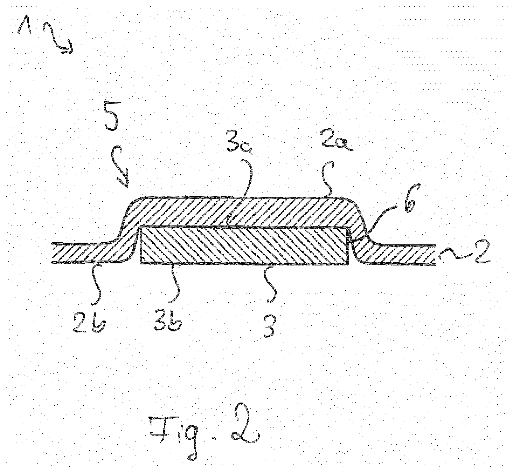

Die Figur 2 zeigt einen Mehrschichtkörper 1 umfassend ein Substrat 2 und eine Sensorfolie 3 im Querschnitt, wobei die erste Oberfläche 2a des Substrats 2 ein Oberflächenrelief 5 ausbildet. Hierbei ist das Oberflächenrelief 5 durch die Formgebung 6 des Sensorfolie 3 bestimmt.

Der Mehrschichtkörper 1 wird vorzugsweise durch ein Verfahren umfassend folgende Schritte hergestellt:
Bereitstellen eines einschichtigen oder mehrschichtigen Substrats 2 mit einer ersten Oberfläche 2a und einer zweiten Oberfläche 2b,
Bereitstellen ein oder mehrerer Sensorfolien 3, welche jeweils mindestens einen Sensorbereich 30 umfassen und eine erste Oberfläche 3a und eine von der ersten Oberfläche 3a abgewandte zweite Oberfläche 3b aufweisen,
Aufbringen der ein oder mehreren Sensorfolien 3 auf die zweite Oberfläche 2b des Substrats 2 derart, dass die erste Oberfläche 3a der jeweiligen Sensorfolie zumindest bereichsweise auf der zweiten Oberfläche 2b des Substrats 2 aufliegt, Thermoformen einer Schichtfolge 4 umfassend das Substrat 2 und die auf die zweite Oberfläche 2b des Substrats 2 aufgebrachten ein oder mehreren Sensorfolien 3 derart, dass beim Thermoformen auf der ersten Oberfläche 2a des Substrats 2 ein Oberflächenrelief 5 ausgebildet wird, welches durch die Formgebung 6, insbesondere Kontur und/oder Höhenrelief, ein oder mehrerer der ein oder mehreren Sensorfolien 3 bestimmt ist.

Insbesondere zeigt die Figur 1 hierbei die Schichtfolge 4, welche aus dem Aufbringen der Sensorfolie 3 auf die zweite Oberfläche 2b des Substrats 2 resultiert, wobei die erste Oberfläche 3a der Sensorfolie 3 auf der zweiten Oberfläche 2b des Substrats 2 aufliegt.

Bevorzugt wird als Substrat 2 ein Substrat 2 bereitgestellt, welches vorzugsweise vor dem Thermoformen eine Schichtdicke, insbesondere eine mittlere Schichtdicke, zwischen 125 µm und 3500 µm, insbesondere zwischen 400 µm und 1500 µm, bevorzugt zwischen 600 µm und 1100 µm, aufweist.

Erfindungsgemäß wird als Substrat 2 ein Substrat 2 bereitgestellt, welches vorzugsweise nach dem Thermoformen eine Schichtdicke, insbesondere eine mittlere Schichtdicke, zwischen 125 µm und 3500 µm, insbesondere zwischen 400 µm und 1500 µm, bevorzugt zwischen 600 µm und 1100 µm, aufweist.

Vorzugsweise wird als Sensorfolie 3 eine Sensorfolie 3 bereitgestellt, welche insbesondere eine Schichtdicke zwischen 10 µm und 300 µm, insbesondere zwischen 50 µm und 200 µm, bevorzugt zwischen 60 µm und 150 µm, aufweist.

Es ist möglich, dass das Aufbringen der Sensorfolie 3 auf die zweite Oberfläche 2b des Substrats 2 insbesondere mittels Laminieren erfolgt, wobei die Laminiertemperatur zwischen 80°C und 300°C, insbesondere zwischen 100°C und 300°C, bevorzugt zwischen 120°C und 240°C, liegt, wobei insbesondere die Laminiergeschwindigkeit zwischen 0,125 m/min und 10 m/min, bevorzugt zwischen 0,25 m/min und 7,5 m/min, besonders bevorzugt zwischen 0,125 m/min und 5 m/min, liegt

Weiter bevorzugt zeigt die Figur 2 den Mehrschichtkörper 1 nach dem Thermoformen der in der Figur 1 gezeigten Schichtfolge 4 umfassend das Substrat 2 und die auf die zweite Oberfläche 2b des Substrats 2 aufgebrachte Sensorfolie 3, wobei beim Thermoformen auf der ersten Oberfläche 2a des Substrats 2 ein Oberflächenrelief 5 ausgebildet wird, welches durch die Formgebung 6 der Sensorfolie 3 bestimmt ist.

Es hat sich insbesondere als vorteilhaft erwiesen, dass beim Thermoformen der Schichtfolge 4 das Oberflächenrelief 5 mittels Tiefziehen und Erwärmung des Substrats 2 ausgebildet wird, wobei das Substrat vorzugsweise auf eine Oberflächentemperatur zwischen 80°C und 300°C, insbesondere zwischen 90°C und 250°C, bevorzugt zwischen 100°C und 300°C, erwärmt wird, wobei insbesondere die Kerntemperatur des Substrats zwischen 120°C und 160°C, bevorzugt zwischen 100°C und 180°C, besonders bevorzugt zwischen 80°C und 200°C, liegt und/oder wobei ein Druck, insbesondere ein Überdruck zwischen 1 bar und 6 bar, insbesondere zwischen 2 bar und 5 bar, bevorzugt zwischen 2 bar und 3,5 bar, angelegt wird. Dieser Druck wirkt insbesondere von einer der beiden Seiten auf das Substrat ein. Von der entsprechenden anderen Substratseite wird vorzugsweise unterstützend zusätzlich ein Vakuum, also ein Unterdruck angelegt, welcher bevorzugt zwischen 0,1 bar und 0,9 bar, insbesondere zwischen 0,2 bar und 0,8 bar, beträgt. Beispielsweise kann von der Vorderseite des Substrats ein Überdruck und von der Rückseite des Substrats ein Unterdruck wirken oder umgekehrt, das heißt vorzugsweise, dass von der Vorderseite des Substrats ein Unterdruck und von der Rückseite des Substrats ein Überdruck angelegt wird.

Es ist vorzugsweise auch möglich, dass beim Thermoformen der Schichtfolge 4 das Oberflächenrelief 5 mittels Laminieren der Schichtfolge 4 ausgebildet wird, wobei die Laminiertemperatur vorzugsweise zwischen 80°C und 300°C, insbesondere zwischen 100°C und 260°C, bevorzugt zwischen 120°C und 240°C, liegt, wobei insbesondere die Laminiergeschwindigkeit zwischen 0,125 m/min und 10 m/min, bevorzugt zwischen 0,25 m/min und 10 m/min, besonders bevorzugt zwischen 0,5 m/min und 10 m/min, und/oder bevorzugt zwischen 0,25 m/min und 7,5 m/min, liegt.

Es ist auch möglich, dass der Mehrschichtkörper 1 ein einschichtiges oder mehrschichtiges Substrat 2 mit einer ersten Oberfläche 2a und einer zweiten Oberfläche 2b und ein oder mehrere Sensorfolien 3 umfasst, welche jeweils mindestens einen Sensorbereich umfassen und eine erste Oberfläche 3a und eine von der ersten Oberfläche 3a abgewandte zweite Oberfläche 3b aufweisen, wobei die ein oder mehreren Sensorfolien 3 auf der zweiten Oberfläche 2b des Substrats 2 angeordnet sind, wobei die erste Oberfläche 3a der Sensorfolie 3 auf der zweiten Oberfläche 2b des Substrats 2 aufliegt, und wobei auf der ersten Oberfläche 2a des Substrats 2 ein Oberflächenrelief 5 ausgeformt ist, welches durch die Formgebung 6, insbesondere Kontur und/oder Höhenrelief, ein oder mehrerer der ein oder mehreren Sensorfolien 3 bestimmt ist.

Vorzugsweise wird als Substrat 2 ein Substrat 2 und/oder als Sensorfolie 3 eine Sensorfolie 3 bereitgestellt wird, welche ein oder mehrere Dekorschichten umfassen, wobei insbesondere die Dekorschichten in ein oder mehreren Bereichen, bevorzugt in dem Sensorbereich, ein oder mehrere Piktogramme aufweisen, wobei sich ein oder mehrere Piktogramme der ein oder mehreren Piktogramme überlagern oder zu einem Gesamtpiktogramm ergänzen.

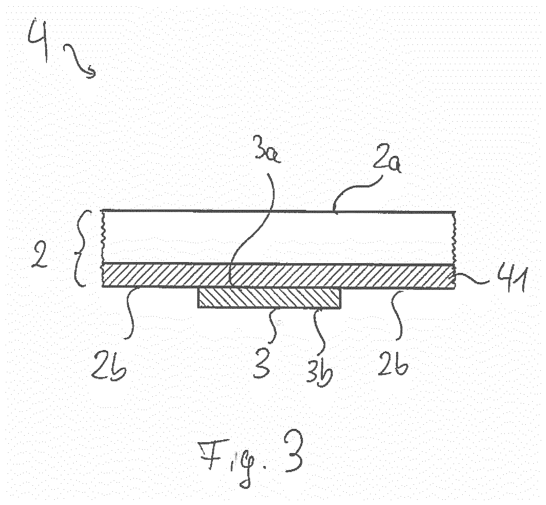

Die Figur 3 zeigt eine Schichtfolge 4 umfassend eine Sensorfolie 3 und eine Substrat 2 im Querschnitt, wobei das Substrat 2 eine Dekorschicht 41 aufweist. Hierbei ist die Dekorschicht 41 vorzugsweise auf der der Sensorfolie 3 zugewandten Oberfläche des Substrats 2 oder von Seiten der zweiten Oberfläche 2b des Substrats 2 auf das Substrat 2 aufgebracht. Die erste Oberfläche 3a Sensorfolie 3 liegt insbesondere bereichsweise auf der zweiten Oberfläche 2b des Substrats 2 auf.

Insbesondere weist die Dekorschicht 41 eine Schichtdicke zwischen 0,01 mm und 10 mm, insbesondere zwischen 0,1 mm und 2,5 mm, bevorzugt zwischen 0,25 mm und 1,25 mm, auf und/oder zwischen 0,1 mm und 10 mm, insbesondere zwischen 0,25 mm und 2,5 mm, bevorzugt zwischen 0,25 mm und 1,25 mm, auf.

Es ist möglich, dass das Aufbringen der Sensorfolie 3 auf die zweite Oberfläche des Substrats 2 umfassend die Dekorschicht 41 insbesondere mittels eines Prägeverfahrens, Abrollverfahrens und/oder Hinterspritzverfahrens erfolgt.

Es ist auch möglich, dass als Substrat 2 vorzugsweise ein Substrat 2 bereitgestellt wird, welches ein oder mehrere Schichten umfasst, ausgewählt aus: Schichten umfassend Pigmente, Farbschichten, Metallschichten, metallisierte Schichten, insbesondere teilmetallisierte Schichten, transparente Schichten, transluzente Schichten, opake Schichten.

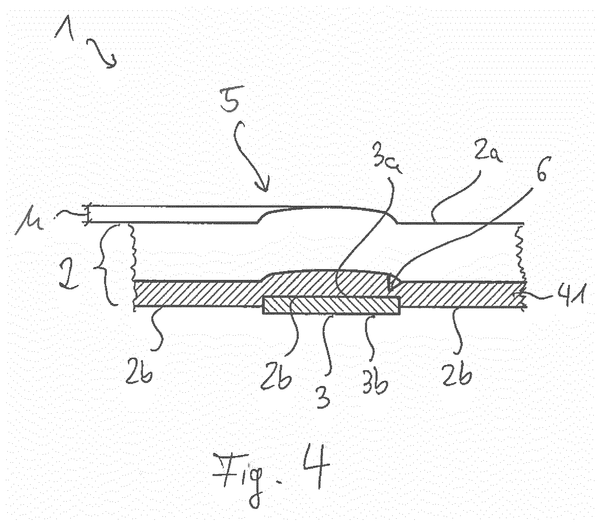

Die Figur 4 zeigt einen Mehrschichtkörper 1 umfassend ein Substrat 2 im Querschnitt, wobei das Substrat 2 eine Dekorschicht 41 aufweist, welche auf die der Sensorfolie 3 zugewandten Oberfläche des Substrats 2 aufgebracht ist, und eine Sensorfolie 3, wobei die erste Oberfläche 2a des Substrats 2 ein Oberflächenrelief 5 ausbildet. Hierbei ist das Oberflächenrelief 5 durch die Formgebung 6 des Sensorfolie 3 bestimmt.

Vorzugsweise wird die Form beim Bereitstellen der Sensorfolie 3 die Formgebung 6 der zumindest einen Sensorfolie 3 modifiziert.

Weiter bevorzugt zeigt die Figur 3 hierbei die Schichtfolge 4, welche aus dem Aufbringen der Sensorfolie 3 auf die zweite Oberfläche 2b des Substrats 2 resultiert, wobei die erste Oberfläche 3a der Sensorfolie 3 zumindest bereichsweise auf der zweiten Oberfläche 2b des Substrats 2 aufliegt.

Insbesondere bevorzugt zeigt die Figur 4 den Mehrschichtkörper 1 nach dem Thermoformen der in der Figur 3 gezeigten Schichtfolge 4 umfassend das Substrat 2 und die auf die zweite Oberfläche 2b des Substrats 2 aufgebrachte Sensorfolie 3, wobei beim Thermoformen auf der ersten Oberfläche 2a des Substrats 2 ein Oberflächenrelief 5 ausgebildet wird, welches durch die Formgebung 6 der Sensorfolie 3 bestimmt ist.

Hierbei weist das beim Thermoformen auf der ersten Oberfläche 2a des Substrats 2 ausgebildete Oberflächenrelief 5 eine Höhendifferenz h zur ursprünglichen Ebene der ersten Oberfläche 2a des Substrats 2 in der in der Figur 3 gezeigten Schichtfolge 4 auf. Die in der Figur 4 gezeigte Höhendifferenz ist insbesondere die Differenz zwischen dem absoluten Maximum des Oberflächenreliefs 5 und dem absoluten Minimum des Oberflächenreliefs 5 entlang einer Richtung, welche insbesondere parallel zu der durch die Ebene des in der Figur 4 gezeigten Mehrschichtkörpers 1 definierten Flächennormale verläuft. Vorzugsweise entspricht das absolute Minimum des Oberflächenreliefs 5 der durch die zweite Oberfläche 2a des Substrats 2 aufgespannten Ebene außerhalb des Oberflächenreliefs 5.

Insbesondere haben Versuche gezeigt, dass das auf der ersten Oberfläche 2a des Substrats 2 ausgebildete Oberflächenrelief 5 vorzugsweise eine maximale Höhendifferenz und/oder eine mittlere Höhendifferenz zwischen einem lokalen Minimum des Oberflächenreliefs 5 oder einem globalen Minimum des Oberflächenreliefs 5 und einem lokalen Maximum des Oberflächenreliefs 5 oder einem globalen Maximum des Oberflächenreliefs 5 aufweist, welche kleiner als 5000 µm, insbesondere kleiner als 2000 µm, bevorzugt kleiner als 1000 µm, ist. Weiter ist es möglich, dass das auf der ersten Oberfläche 2a des Substrats 2 ausgebildete Oberflächenrelief 5 vorzugsweise eine maximale Höhendifferenz und/oder eine mittlere Höhendifferenz zwischen einem lokalen Minimum des Oberflächenreliefs 5 oder einem globalen Minimum des Oberflächenreliefs 5 und einem lokalen Maximum des Oberflächenreliefs 5 oder einem globalen Maximum des Oberflächenreliefs 5 aufweist, welche größer gleich 50 µm, insbesondere größer 25 µm, bevorzugt größer 10 µm, ist.

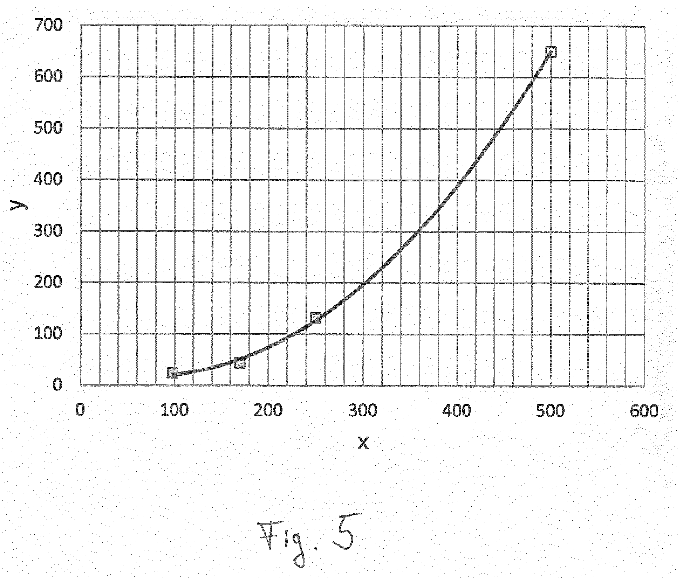

Die Figur 5 und die Tabelle 1 zeigen die Ergebnisse eine Serie einer Messserie in Abhängigkeit der Variablen x und y, wobei die Messserie vier Messpunkte (gekennzeichnet durch Quadrate) umfasst. Die Variable x entspricht der Schichtdicke der auf das Substrat 2 aufgebrachten Sensorfolie 3 und die Variable y entspricht der Schichtdicke des Substrats 2 nach dem Thermoformen. Das Substrat 2 wies vor dem Thermoformen insbesondere eine Schichtdicke von y₀ = 750 µm auf.

**Tabelle 1**

| Schichtdicke Substrat vor dem Thermoformen | Schichtdicke Sensorfolie | Höhe h (insbesondere h gezeigt in Fig. 4) |
|---|---|---|
| y₀ [µm] | x [µm] | y₁ [µm] |
| 750 | 98 | 122 |
| 750 | 170 | 214 |
| 750 | 250 | 381 |
| 750 | 500 | 1150 |

Es hat sich hierbei insbesondere gezeigt, dass die Änderung der Höhe des bereitgestellten Substrats mit auflaminiertem Sensor, vorzugsweise eines Substrats mit auflaminiertem Sensor mit einer vorbestimmten Schichtdicke, durch das Thermoformen insbesondere einen funktionalen Zusammenhang zur Schichtdicke der aufgebrachten Sensorfolie aufweist, wobei dieser funktionale Zusammenhang insbesondere ein Polynom zweiten Grades der Form y = a·x² + b·x + c, bevorzugt mit den Parametern a = 0,0035; b = 0,4832, c = 38,19; und vorzugsweise den Variablen x = Schichtdicke des aufgebrachten Sensorlabels, y = Höhe h der Ausformung am Ort des Sensorlabels im Vergleich zu der übrigen Substratfläche ohne Sensorlabel nach dem Thermoformen, ist.

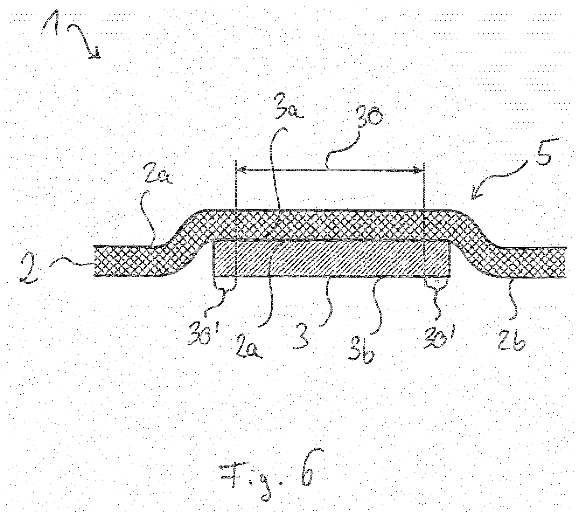

Die Figur 6 zeigt einen Mehrschichtkörper 1 umfassend eine Sensorfolie 3 und ein Substrat 2 im Querschnitt, wobei die Sensorfolie 3 bereichsweise auf die zweite Oberfläche 2b des Substrats 2 aufgebracht ist. Weiter ist in der ersten Oberfläche 2a des Substrats 2 ein Oberflächenrelief 5 ausgebildet. Der Mehrschichtkörper 1 und insbesondere die Sensorfolie 3 weisen weiter einen Sensorbereich 30 auf, welcher insbesondere von einen geschlossenen oder zwei nicht zusammenhängenden Randbereichen 30' umgeben ist. Bevorzugt ist der Randbereich 30' ringförmig, insbesondere ringförmig, um den Sensorbereich 30 angeordnet, wobei der Sensorbereich 30 insbesondere kreisflächenförmig ausgebildet ist.

Insbesondere weist die Sensorfolie 3 in dem Sensorbereich 30 ein oder mehrere Sensorelemente, insbesondere kapazitive und/oder resistive Sensorelemente, auf. Weiter bevorzugt weist die Sensorfolie 3 einen Anschlussbereich und/oder Kontaktbereich zur Kontaktierung, insbesondere zur elektrischen Kontaktierung, von ein oder mehreren der Sensorelemente aufweist.

Vorzugsweise wird als Sensorfolie 3 eine Sensorfolie 3 bereitgestellt wird, welche eine Basisfolie und ein oder mehrere auf die Basisfolie aufgebrachte und/oder eingebrachte elektrisch leitfähige Schichten aufweist, insbesondere bestehend aus einem metallischen Material.

Es ist möglich, dass die ein oder mehreren elektrisch leitfähigen Schichten in dem Sensorbereich 30 ein oder mehrere Sensorelektroden zur Ausbildung ein oder mehrere der Sensorelemente ausbilden, insbesondere zur Ausbildung ein oder mehrerer kapazitiver Sensorelemente und/oder ein oder mehrerer resistiver Sensorelemente ausbilden und/oder dass die ein oder mehreren elektrisch leitfähigen Schichten in dem Anschlussbereich und/oder Kontaktbereich ein oder mehrere Kontaktelektroden zur Kontaktierung der ein oder mehreren Sensorelektroden aufweisen.

Weiter ist es möglich, dass der Sensorbereich 30 mindestens einen zumindest teilweise umschließenden Randbereich, insbesondere einen ringförmigen Randbereich, insbesondere einen kreisringförmigen Randbereich, umfasst, in welchem die ein oder mehreren Sensorelektroden nicht vorhanden sind, wobei bevorzugt der Randbereich den Umfang des Sensorbereichs 30 von außen oder von innen umschließt und/oder dem Umfang des Sensorbereichs 30 folgt und/oder den Umfang des Sensorbereichs 30 vollständig oder teilweise überlappt, wobei der Randbereich vorzugsweise eine Breite, insbesondere eine radiale Breite, zwischen 0,25 mm und 5 mm, bevorzugt zwischen 0,5 mm und 5 mm, aufweist und/oder dass der ringförmige Randbereich, insbesondere der kreisringförmige Randbereich, vorzugsweise eine Ringbreite zwischen 0,25 mm und 5 mm, bevorzugt zwischen 0,5 mm und 2 mm, aufweist.

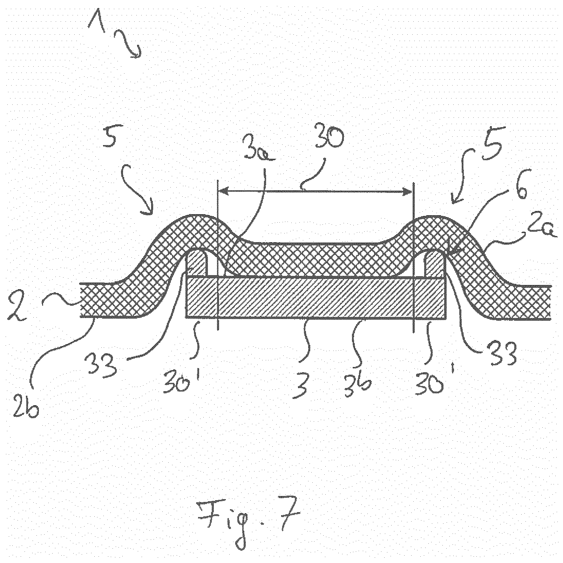

Die Figur 7 zeigt den in der Figur 6 gezeigten Mehrschichtkörper im Querschnitt, bis auf, dass der vorliegende Mehrschichtkörper 1 in den Randbereichen 30' funktionale Elemente 33 aufweist, welche insbesondere zwischen der zweiten Oberfläche 2 des Substrats 2 und der ersten Oberfläche 3a der Sensorfolie 3 angeordnet sind. In die erste Oberfläche 2a des Substrats 2 ist ein Oberflächenrelief 5 ausgebildet, welches der Formgebung 6 folgt. Die Formgebung 6 wird hierbei insbesondere von der Sensorfolie 3 und den funktionalen Elementen 33 bereitgestellt.

Insbesondere ist es möglich, dass die Formgebung 6, insbesondere die Kontur und/oder das Höhenrelief, der Sensorfolie 3 durch Abformung mindestens eines Oberflächenreliefs modifiziert wird, wobei das mindestens eine Oberflächenrelief insbesondere mittels ein oder mehrerer Verfahren, ausgewählt aus: thermischer Replikation, UV-Replikation, Laser-Ablation, Stanzen, Schneiden, Prägen, Spritzgießen, in ein oder mehrere Schichten der Sensorfolie abgeformt wird. Vorzugsweise wir das Oberflächenrelief hierbei in die erste Oberfläche 3a und/oder die zweite Oberfläche 3b der Sensorfolie 3 eingebracht.

Weiter ist es möglich, dass die Formgebung, insbesondere das Höhenrelief und/oder die Kontur, der Sensorfolie 3 durch Aufbringen ein oder mehrerer Elemente, insbesondere durch Aufbringen der funktionalen Elemente 33, auf die Basisfolie der Sensorfolie 3 modifiziert wird, die insbesondere mittels ein oder mehrerer der folgenden Verfahren aufgebracht werden: Drucken, insbesondere Aufdrucken eines Lacks und/oder mittels 3D-Druck, Aufkaschieren eines ein oder mehrschichtigen Folienelements, insbesondere eines Kunststofflabels, Aufbringen eines Gewebes, insbesondere Glasfasergewebes, Aufbringen eines Fasermaterials, insbesondere eines organischen Fasermaterials, Hinterspritzen, Aufbringen der ein oder mehreren Elemente mittels eines Transferverfahrens, insbesondere eines Heiß- oder Kaltprägeverfahrens.

Es ist möglich, dass die funktionalen Elemente 33 insbesondere auf eine erste Oberfläche einer Basisfolie der Sensorfolie 3 aufgebracht werden, wobei vorzugsweise die erste Oberfläche der Basisfolie der ersten Oberfläche 3a der Sensorfolie 3 zugewandt ist und/oder die erste Oberfläche 3a der Sensorfolie teilweise ausbildet.

Weiter ist es möglich, dass die funktionalen Elemente 33 auf ein oder mehrere der auf der ersten Oberfläche der Basisfolie der Sensorfolie 3 aufgebrachten funktionalen Elemente 33 aufgebracht werden.

Es ist auch möglich, dass die funktionalen Elemente 33 auf die Basisfolie in dem Sensorbereich 30 der Sensorfolie 3 aufgebracht werden und den Sensorbereich 30, insbesondere projiziert auf die durch die erste Oberfläche 3a der zumindest einen Sensorfolie 3 aufgespannten Ebene, insbesondere flachen oder gekrümmten Ebene, vollständig oder teilweise überlappen.

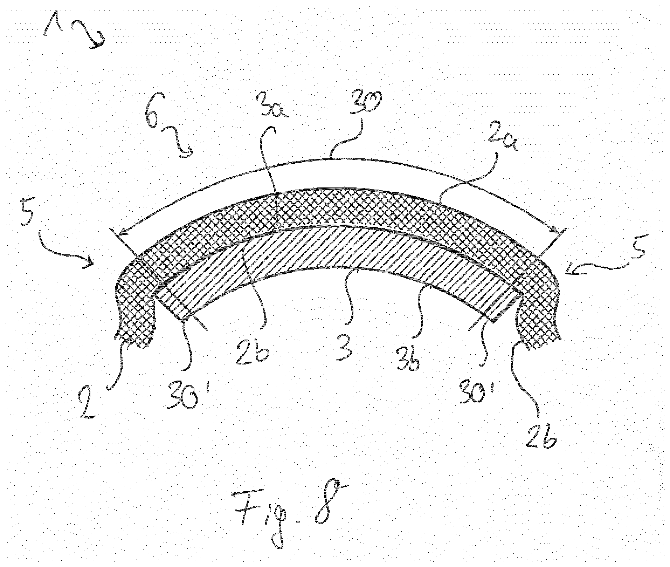

Die Figur 8 zeigt den in der Figur 6 gezeigten Mehrschichtkörper im Querschnitt, bis auf, dass der vorliegende Mehrschichtkörper 1 eine Krümmung aufweist. Weiter weist das in der ersten Oberfläche 2a des Substrats 2 ausgebildete Oberflächenrelief 5 eine Krümmung auf, welche insbesondere der Krümmung des Mehrschichtkörpers 1 folgt.

Es ist möglich, dass die dem Mehrschichtkörper 1 zu Grunde liegende Schichtfolge 4 vor dem Thermoformen vorzugsweise eine Krümmung mit einem minimalen oder maximalen Krümmungsradius und/oder mit einem mittleren Krümmungsradius von nicht kleiner als 1,5 mm, bevorzugt von nicht kleiner als 1 mm, aufweist.

Weiter ist es möglich, dass die dem Mehrschichtkörper 1 zu Grunde liegende Schichtfolge 4 beim Thermoformen derart modifiziert wird, dass die Schichtfolge 4 nach dem Thermoformen beziehungsweise der Mehrschichtkörper 1 eine Krümmung mit einem minimalen oder maximalen Krümmungsradius und/oder mit einem mittleren Krümmungsradius von nicht kleiner als 1,5 mm, bevorzugt von nicht kleiner als 1,0 mm, aufweist.

Vorzugsweise weisen die Schichtfolge 4 und/oder der Mehrschichtkörper 1 unterschiedliche oder gleiche Krümmungen in unterschiedlichen Richtungen auf.

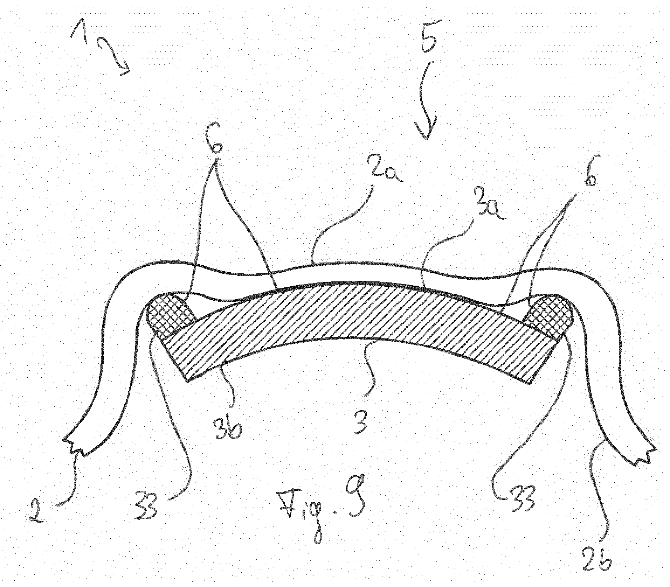

Die Figur 9 zeigt den in der Figur 7 gezeigten Mehrschichtkörper umfassend die Elemente 33 im Querschnitt, bis auf, dass der vorliegende Mehrschichtkörper 1 eine Krümmung aufweist. Weiter weist das in der ersten Oberfläche 2a des Substrats 2 ausgebildete Oberflächenrelief 5 eine Krümmung auf, welche insbesondere der Krümmung des Mehrschichtkörpers 1 und der durch die Sensorfolie 3 und die funktionalen Elemente 33 bestimmten Formgebung 6 folgt.

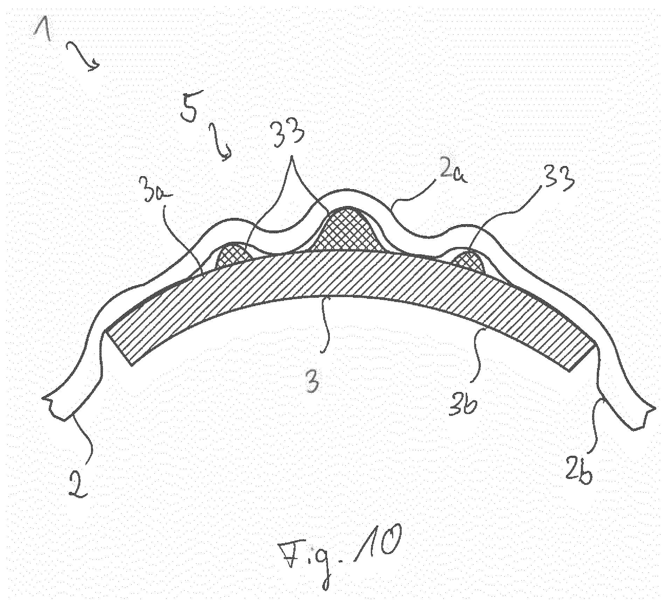

Die Figur 10 zeigt den in der Figur 9 gezeigten gekrümmten Mehrschichtkörper im Querschnitt, bis auf, dass der vorliegende Mehrschichtkörper 1 keine funktionalen Elemente 33 an den Rändern der Sensorfolie 3 aufweist, sondern mit unterschiedlichen Abständen zu den Rändern der Sensorfolie 3. Weiter weist das in der ersten Oberfläche 2a des Substrats 2 ausgebildete Oberflächenrelief 5 eine Krümmung auf, welche insbesondere der Krümmung des Mehrschichtkörpers 1 und der durch die Sensorfolie 3 und die funktionalen Elemente 33 bestimmten Formgebung 6 folgt.

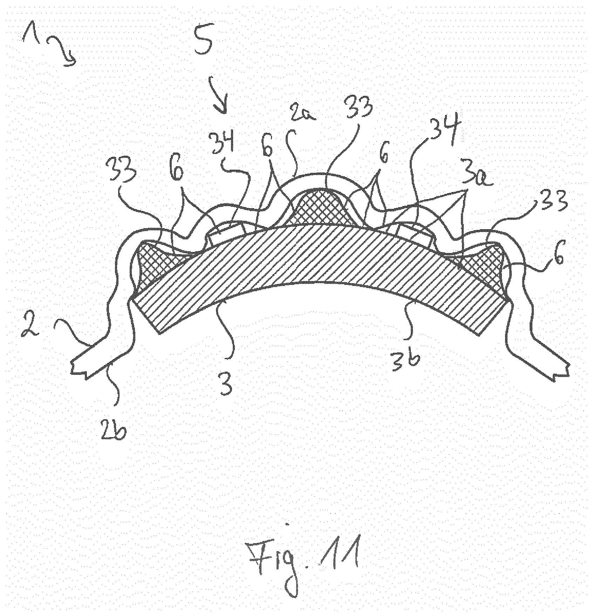

Die Figur 11 zeigt den in der Figur 10 gezeigten gekrümmten Mehrschichtkörper im Querschnitt, bis auf, dass der vorliegende Mehrschichtkörper 1 funktionale Elemente 33 an den Rändern der Sensorfolie 3 aufweist, funktionale Elemente 33 mit unterschiedlichen Abständen zu den Rändern der Sensorfolie 3 aufweist und Lichtleiter 34 aufweist, welche insbesondere zwischen den funktionalen Elementen 33 auf der ersten Oberfläche 3a der Sensorfolie 3 angeordnet sind. Weiter weist das in der ersten Oberfläche 2a des Substrats 2 ausgebildete Oberflächenrelief 5 eine Krümmung auf, welche insbesondere der Krümmung des Mehrschichtkörpers 1 und der durch die Sensorfolie 3, die funktionalen Elemente 33 und der Lichtleiter 34 bestimmten Formgebung 6 folgt.

Vorzugsweise werden ein oder mehrere der funktionalen Elemente 33 von einem Element ausgebildet, welches eine elektrische und/oder optische Funktion erbringt, insbesondere von einem Lichtleiter gebildet wird.

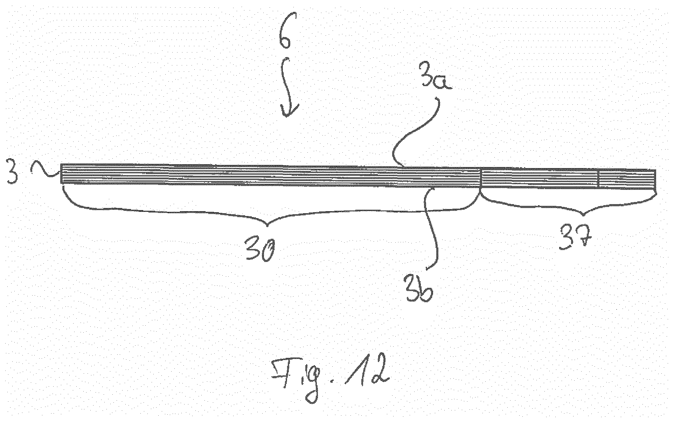

Die Figur 12 zeigt eine Sensorfolie 3 umfassend einen Sensorbereich 30 und einen Anschlussbereich, welcher vorzugsweise in einem Kontaktbereich 37 endet, sowie eine erste Oberfläche 3a und eine zweite Oberfläche 3b im Querschnitt. Weiter weist die Sensorfolie 3 eine flache oder ebene Formgebung 6 auf. Vorzugsweise umfasst die Sensorfolie 3 eine Basisfolie.

Es ist möglich, dass die Sensorfolie 3 den Kontaktbereich 37 insbesondere zur Kontaktierung, insbesondere zur elektrischen Kontaktierung, von ein oder mehreren im Sensorbereich 30 angeordneten Sensorelementen aufweist.

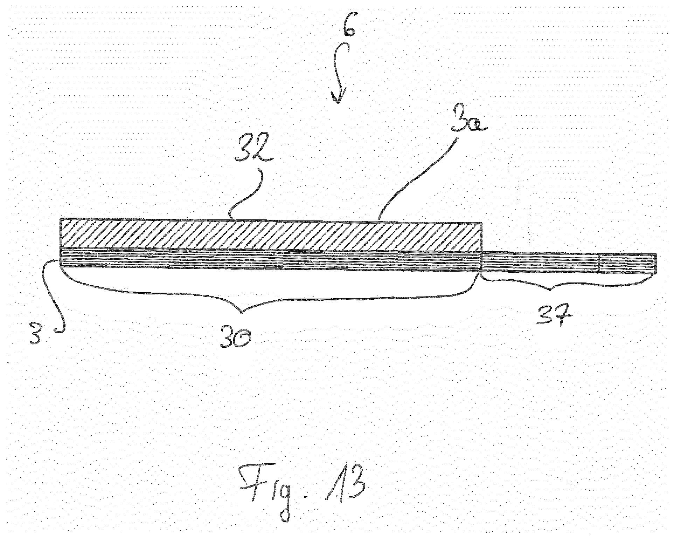

Die Figur 13 zeigt die in der Figur 12 gezeigte Sensorfolie im Querschnitt, bis auf, dass die vorliegende Sensorfolie 3 ein in dem Sensorbereich 30 auf der ersten Oberfläche 3a der Sensorfolie 3 aufliegendes Kunststofflabel 32 aufweist.

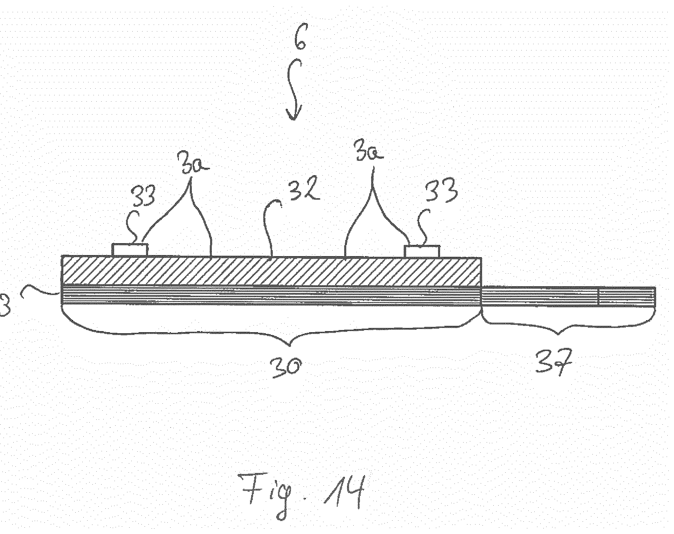

Die Figur 14 zeigt die in der Figur 13 gezeigte Sensorfolie umfassend das Kunststofflabel 32 im Querschnitt, bis auf, dass die vorliegende Sensorfolie 3 in dem Sensorbereich 30 auf der von der Sensorfolie 3 abgewandten Oberfläche des Kunststofflabels 32 aufgebrachte funktionale Elemente 33 aufweist.

Insbesondere werden als Element das Kunststofflabels 32 und/oder als Elemente die funktionalen Elemente 33 auf die erste Oberfläche der Basisfolie der Sensorfolie 3 aufgebracht, wobei die erste Oberfläche der Basisfolie der ersten Oberfläche 3a der Sensorfolie 3 zugewandt ist und/oder die erste Oberfläche 3a der Sensorfolie 3 teilweise ausbildet.

Vorzugsweise werden ein oder mehrere Kunststofflabels 32 und/oder ein oder mehrere funktionale Elemente 33 auf das auf der ersten Oberfläche der Basisfolie der Sensorfolie 3 aufgebrachte Kunststofflabel 32 und/oder auf die auf der ersten Oberfläche der Basisfolie der Sensorfolie aufgebrachten funktionalen Elemente 33 aufgebracht.

Es ist möglich, dass das Kunststofflabel 32 und/oder die funktionalen Elemente 33 insbesondere auf die Basisfolie in dem Sensorbereich 30 der Sensorfolie 3 aufgebracht werden und den Sensorbereich 30, insbesondere projiziert auf die durch die erste Oberfläche 3a der zumindest einen Sensorfolie 3 aufgespannten Ebene, insbesondere flachen oder gekrümmten Ebene, vollständig oder teilweise überlappen.

Weiter ist es möglich, dass die Sensorfolie 3 den Kontaktbereich 37 insbesondere zur Kontaktierung von ein oder mehreren im Sensorbereich 30 angeordneten Sensorelementen aufweist und dass das Kunststofflabel 32 und/oder die funktionalen Elemente 33 auf die Basisfolie in dem Sensorbereich 30 der Sensorfolie 3 aufgebracht werden und vorzugsweise den Sensorbereich 30, insbesondere projiziert auf die durch die erste Oberfläche 3a der zumindest einen Sensorfolie 3 aufgespannten Ebene, insbesondere flachen oder gekrümmten Ebene, vollständig oder teilweise überlappen, jedoch den Kontaktbereich 37 der Sensorfolie 3 nicht überlappen.

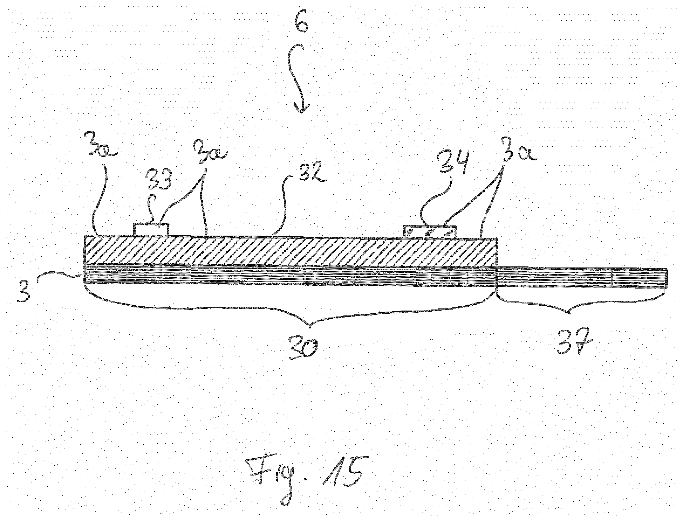

Die Figur 15 zeigt die in der Figur 14 gezeigte Sensorfolie umfassend das Kunststofflabel 32 und die funktionalen Elemente 33 im Querschnitt, bis auf, dass die vorliegende Sensorfolie 3 ein in dem Sensorbereich 30 auf der von der Sensorfolie 3 abgewandten Oberfläche des Kunststofflabels 32 aufgebrachtes funktionales Element 33 und einen Lichtleiter 34 aufweist.

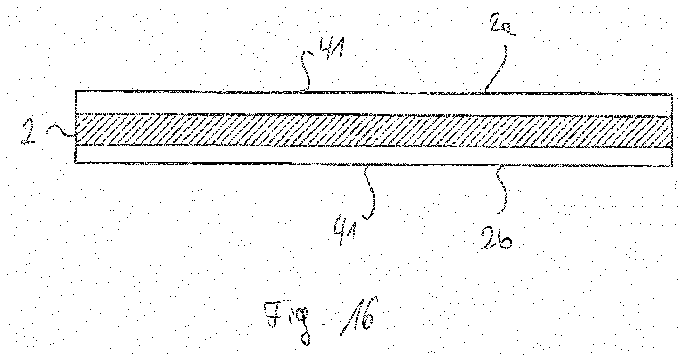

Die Figur 16 zeigt ein Substrat 2 umfassend zwei Dekorschichten 41 im Querschnitt, wobei die zwei Dekorschichten 41 insbesondere jeweils von Seiten der ersten Oberfläche 2a des Substrats 2 auf das Substrat 2 aufgebracht sind und von Seiten der zweiten Oberfläche 2b des Substrats 2 auf das Substrat 2 aufgebracht sind.

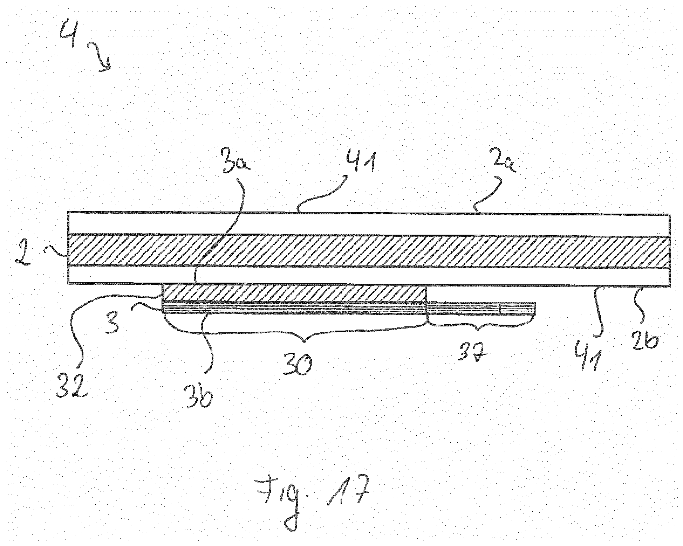

Die Figur 17 zeigt das in der Figur 16 gezeigte Substrat 2 umfassend zwei Dekorschichten 41 und die in der Figur 13 gezeigte Sensorfolie 3 umfassend ein Kunststofflabel 32 als Schichtfolge 4 im Querschnitt, wobei die von der Sensorfolie 3 abgewandte Seite des Kunststofflabels 32 bereichsweise auf der zweiten Oberfläche 2b des Substrats 2 aufliegt.

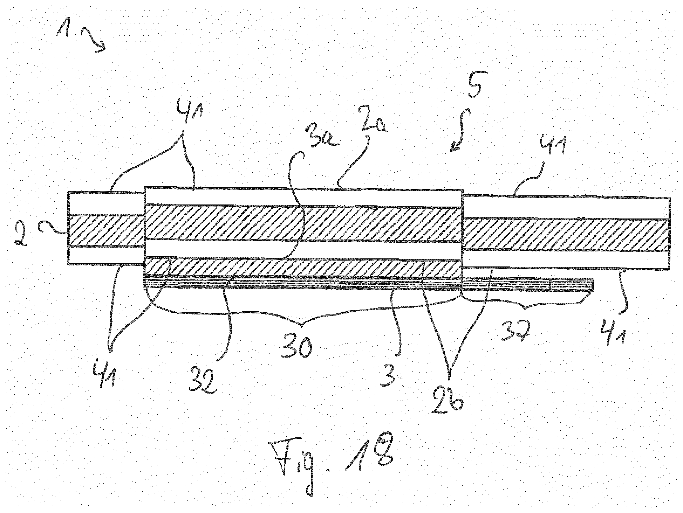

Die Figur 18 zeigt die in der Figur 17 gezeigte Schichtfolge 4 nach dem Thermoformen als Mehrschichtkörper 1 im Querschnitt, wobei in der ersten Oberfläche 2a des Substrats 2 des Mehrschichtkörpers 1 ein Oberflächenrelief 5 abgeformt wird, welches insbesondere durch die Formgebung 6 der von der Sensorfolie 3 abgewandte Oberfläche des Kunststofflabels 32 bestimmt wird.

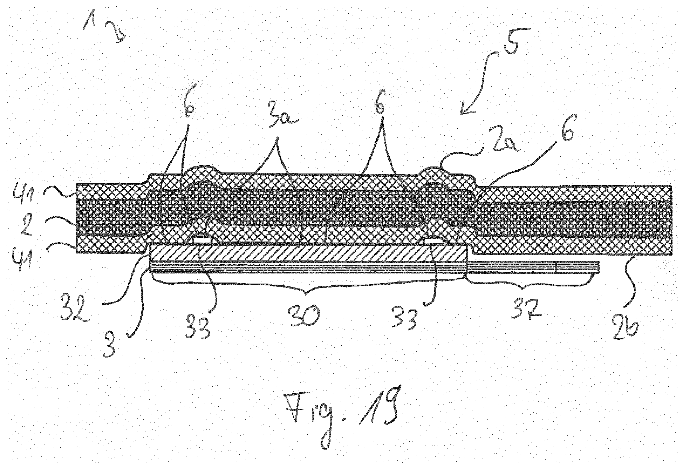

Die Figur 19 zeigt das in der Figur 14 gezeigte Substrat 2 umfassend zwei Dekorschichten 41 und die in der Figur 14 gezeigte Sensorfolie 3 umfassend ein Kunststofflabel 32 und die funktionalen Elemente 33 als Mehrschichtkörper 1 nach dem Thermoformen im Querschnitt, wobei die von der Sensorfolie 3 abgewandte Seite des Kunststofflabels 32 bereichsweise auf der zweiten Oberfläche 2b des Substrats 2 aufliegt. Weiter folgt das in der ersten Oberfläche 2a des Substrats 2 des Mehrschichtkörpers 1 Oberflächenrelief 5 insbesondere der durch die Sensorfolie 3, das Kunststofflabel 32 und die funktionalen Elementen 33 bestimmten Formgebung 6.

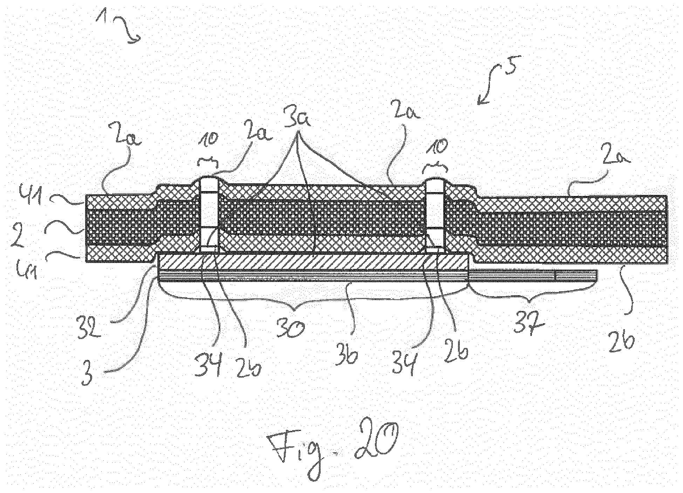

Die Figur 20 zeigt den in der Figur 19 gezeigten Mehrschichtkörper im Querschnitt, bis auf, dass der vorliegende Mehrschichtkörper 1 beziehungsweise das Substrat 2 umfassend die zwei Dekorschichten 41 zwei transparente Bereiche 10 aufweist. Die funktionalen Elemente sind hierbei vorzugsweise als Lichtleiter 34 ausgebildet. Von der ersten Oberfläche 2a des Substrats 2 her betrachtet, ist das emittierte Licht der Lichtleiter 43 vorzugsweise durch die transparenten Bereiche 10 des Substrats 2 umfassend die zwei Dekorschichten 41 von einem Betrachter erfassbar. Die transparenten Bereiche 10 sind vorzugsweise derart in das Oberflächenrelief 5 integriert, dass die Lichtleiter 34 insbesondere von Seiten der ersten Oberfläche 2a des Substrats 2 des Mehrschichtkörpers 1 erfassbar sind.

Es ist möglich, dass das Substrat 2 ein oder mehrere transparente Bereiche oder die transparenten Bereiche 10 aufweist, wobei insbesondere der Transmissionsgrad des Substrats 2 zwischen der ersten Oberfläche 2a des Substrats 2 und der zweiten Oberfläche 2b des Substrats 2 in den ein oder mehreren transparenten Bereichen oder den transparenten Bereichen 10 in einem für das menschliche Auge sichtbaren Wellenlängenbereich größer als 1%, bevorzugt größer als 2%, weiter bevorzugt größer als 4%, und/oder kleiner als 99%, bevorzugt kleiner als 95%, weiter bevorzugt kleiner als 92%, ist.

Weiter ist es auch möglich, dass die ein oder mehreren Sensorelektroden, insbesondere ein oder mehrere aktive Sensorbereiche der ein oder mehreren Sensorelektroden, welche insbesondere in der Sensorfolie 3 angeordnet sind, für das menschliche Auge eine Transparenz mit einem Transmissionsgrad von mehr als 60%, insbesondere von mehr als 80%, aufweisen und/oder jeweils von einem Netz von dünnen Leiterbahnen mit einer Leiterbahnbreite zwischen 3 µm und 60 µm, insbesondere 4 µm und 60 µm, insbesondere bevorzugt zwischen 4 µm und 50 µm, gebildet werden.

Es hat sich als vorteilhaft für die Touchfunktionalität des Mehrschichtkörpers 1 erwiesen, dass die dem Mehrschichtkörper zu Grunde liegende Schichtfolge 4 zumindest im Sensorbereich 30 eine Kapazität von maximal 200 pF, bevorzugt maximal 150 pF, weiter bevorzugt maximal 100 pF, aufweist.

Weiter ist es vorteilhaft, dass das auf der ersten Oberfläche 2a des Substrats 2 ausgebildete Oberflächenrelief 5 vorzugsweise haptisch und/oder optisch erfassbar ist und/oder dass das auf der ersten Oberfläche 2a des Substrats 2 ausgebildete Oberflächenrelief 5 insbesondere haptisch aber nicht optisch erfassbar ist oder optisch aber nicht haptisch erfassbar ist beziehungsweise haptisch und nicht optisch erfassbar ist oder optisch und nicht haptisch erfassbar ist.

Vorzugsweise ist das auf der ersten Oberfläche des Substrats 2 ausgebildete Oberflächenrelief 5 als Braille-Schrift, insbesondere als ein oder mehrere Buchstaben, ein oder mehrere Zahlen, ein oder mehrere Wörter, und/oder ein oder mehrere Sätze in Braille-Schrift, ausgebildet ist.

Weiter ist es möglich, dass die Sensorfolie 3 in dem Sensorbereich 30, insbesondere bereichsweise oder vollflächig, ein oder mehrere Folien und/oder ein oder mehrere Schichten aufweist, ausgewählt aus: Basisfolie, Kunststofflabel 32, funktionale Elemente 33, insbesondere Lichtleiter 34, Dekorschicht 41, elektrisch leitfähige Schicht, insbesondere metallische Schicht, Kleberschicht, Haftvermittlerschicht, wobei die ein oder mehreren elektrisch leitfähigen Schichten jeweils ein oder mehrere Sensorelektroden und/oder ein oder mehrere Kontaktelektroden aufweisen.

Es ist auch möglich, dass die Sensorfolie 3 in dem Sensorbereich 30 ein oder mehrere Sensorelektroden und/oder ein oder mehrere Kontaktelektroden aufweist, wobei die Sensorelektroden und/oder die Kontaktelektroden, insbesondere projiziert auf die durch die erste Oberfläche 3a der zumindest einen Sensorfolie 3 aufgespannten Ebene, insbesondere flachen oder gekrümmten Ebene, nebeneinander angeordnet sind und/oder einander nicht überlappen und/oder sich, insbesondere bei Betrachtung parallel zu einer von der Ebene des Mehrschichtkörper definierten Flächennormalen, ein oder mehrere Sensorelektroden der ein oder mehreren Sensorelektroden mit ein oder mehreren Kontaktelektroden der ein oder mehreren Kontaktelektroden überlappen.

Weiter ist es möglich, dass das Oberflächenrelief 5, insbesondere projiziert auf die durch die erste Oberfläche 3a der Sensorfolie 3 aufgespannten Ebene, insbesondere flachen oder gekrümmten Ebene, zumindest teilweise aus ein oder mehreren geraden, gekrümmten, kreisbogenförmigen und/oder kreisförmigen Erhebungen und/oder Vertiefungen, insbesondere in dem Sensorbereich 30, zusammengesetzt ist.

Weiter ist es auch möglich, dass das Oberflächenrelief 5, insbesondere projiziert auf die durch die erste Oberfläche 3a der Sensorfolie 3 aufgespannten Ebene, insbesondere flachen oder gekrümmten Ebene, zumindest teilweise mit ein oder mehreren linearen, spiralförmigen und/oder elliptischen Erhebungen und/oder Vertiefungen, insbesondere in dem Sensorbereich 30, ausgebildet ist.

Vorzugsweise ist das Oberflächenrelief 5, insbesondere in dem Sensorbereich 30, derart ausgebildet, dass vorzugsweise ein oder mehrere Erhebungen der ein oder mehreren Erhebungen und/oder ein oder mehrere Vertiefungen der ein oder mehreren Vertiefungen, insbesondere in dem Sensorbereich 30, jeweils einen konstanten oder variierenden Flankenwinkel und/oder eine konstante oder variierende Breite und/oder eine konstante oder variierende Höhe beziehungsweise Tiefen und/oder eine konstante oder variierende Krümmung aufweisen.

Insbesondere wird die Form ein oder mehrere Erhebungen der ein oder mehreren Erhebungen und/oder ein oder mehrere Vertiefungen der ein oder mehreren Vertiefungen, insbesondere projiziert auf die durch erste Oberfläche 3a der Sensorfolie 3 aufgespannten Ebene, insbesondere flachen oder gekrümmten Ebene, bevorzugt in dem Sensorbereich 30, jeweils ausgewählt oder kombiniert aus: Linie, Gerade, Motiv, Bild, Dreieck, Welle, Viereck, Vieleck, gekrümmte Linie, Kreis, Oval, Trapez, Parallelogramm, Raute, Kreuz, Sichel, Aststruktur, Stern, Ellipse, Zufallsmuster, Pseudozufallsmuster, wobei sich die ein oder mehreren Erhebungen und/oder die ein oder mehreren Vertiefungen insbesondere überlagern und/oder ergänzen.

Es ist möglich, dass eine oder mehrere Erhebungen der ein oder mehreren Erhebungen und/oder ein oder mehrere Vertiefungen der ein oder mehreren Vertiefungen über den Verlauf, insbesondere in der durch die erste Oberfläche 3a der Sensorfolie 3 aufgespannten Ebene, insbesondere flachen oder gekrümmten Ebene, der jeweiligen Erhebungen und/oder Vertiefungen derart ausgebildet werden, dass eine oder mehrere der Höhen der Erhebungen und/oder ein oder mehrere Tiefen der Vertiefungen, insbesondere senkrecht zu der durch die zweite Oberfläche 2b des Substrats 2 aufgespannten Ebene, nicht oder zumindest abschnittsweise eine Variation aufweisen, wobei die Variation ausgewählt wird aus: wellenförmig, symmetrisch, asymmetrisch, periodisch, aperiodisch, diskret, kontinuierlich, gestuft.

### Bezugszeichenliste:

- 1: Mehrschichtkörper
- 10: Transparenter Bereich
- 2: Substrat
- 2a: Erste Oberfläche
- 2b: Zweite Oberfläche
- 3: Sensorfolie
- 3a: Erste Oberfläche
- 3b: Zweite Oberfläche
- 30: Sensorbereich
- 30': Randbereich
- 31: Basisfolie
- 31a: Erste Oberfläche
- 31b: Zweite Oberfläche
- 32: Kunststofflabel
- 33: Funktionales Element
- 34: Lichtleiter
- 35: Sensorelement
- 36: Sensorelektroden
- 36': Kontaktelektroden
- 37: Kontaktbereich
- 4: Schichtfolge
- 41: Dekorschicht
- 42: Elektrisch leitfähige Schichten
- 50a: Erhebung
- 50b: Vertiefung
- 5: Oberflächenrelief
- 6: Formgebung
- 7: Oberflächenrelief
- h: Höhendifferenz
- x: Variable
- y: Variable

## Patentansprüche

1. Verfahren zur Herstellung eines Mehrschichtkörpers (1), wobei das Verfahren folgende Schritte umfasst:
Bereitstellen eines einschichtigen oder mehrschichtigen Substrats (2) mit einer ersten Oberfläche (2a) und einer zweiten Oberfläche (2b),
Bereitstellen ein oder mehrerer Sensorfolien (3), welche jeweils mindestens einen Sensorbereich (30) umfassen und eine erste Oberfläche (3a) und eine von der ersten Oberfläche (3a) abgewandte zweite Oberfläche (3b) aufweisen,
Aufbringen der ein oder mehreren Sensorfolien (3) auf die zweite Oberfläche (2b) des Substrats (2) derart, dass die erste Oberfläche (3a) der jeweiligen Sensorfolie zumindest bereichsweise auf der zweiten Oberfläche (2b) des Substrats (2) aufliegt,
Thermoformen einer Schichtfolge (4) umfassend das Substrat (2) und die auf die zweite Oberfläche (2b) des Substrats (2) aufgebrachten ein oder mehreren Sensorfolien (3) derart, dass beim Thermoformen auf der ersten Oberfläche (2a) des Substrats (2) ein Oberflächenrelief (5) ausgebildet wird, welches durch die Formgebung (6), insbesondere Kontur und/oder Höhenrelief, ein oder mehrerer der ein oder mehreren Sensorfolien (3) bestimmt ist,
wobei die ein oder mehreren Sensorfolien (3) jeweils in dem mindestens einen Sensorbereich (30) ein oder mehrere kapazitive und/oder resistive Sensorelemente, aufweisen und
wobei die ein oder mehreren Sensorfolien (3) jeweils zumindest einen Anschlussbereich und/oder Kontaktbereich (37) zur Kontaktierung von ein oder mehreren der Sensorelemente (35) aufweist, **dadurch gekennzeichnet, dass** beim Bereitstellen zumindest einer Sensorfolie (3) der ein oder mehreren Sensorfolien (3) das Höhenrelief, der zumindest einen Sensorfolie (3) modifiziert wird,
wobei als Substrat (2) ein Substrat (2) bereitgestellt wird, welches nach dem Thermoformen eine Schichtdicke, insbesondere eine mittlere Schichtdicke, zwischen 125 µm und 3500 µm, insbesondere zwischen 400 µm und 1500 µm, bevorzugt zwischen 600 µm und 1100 µm, aufweist, und
wobei das auf der ersten Oberfläche (2a) des Substrats (2) ausgebildete Oberflächenrelief (5) eine maximale Höhendifferenz und/oder eine mittlere Höhendifferenz zwischen einem lokalen Minimum des Oberflächenreliefs (5) oder einem globalen Minimum des Oberflächenreliefs (5) und einem lokalen Maximum des Oberflächenreliefs (5) oder einem globalen Maximum des Oberflächenreliefs (5) aufweist, welche kleiner als 5000 µm, insbesondere kleiner als 2000 µm, bevorzugt kleiner als 1000 µm, ist.

2. Verfahren nach Anspruch 1,
**dadurch gekennzeichnet,**
**dass** beim Bereitstellen zumindest einer Sensorfolie (3) der ein oder mehreren Sensorfolien (3) die Kontur und das Höhenrelief, der zumindest einen Sensorfolie (3) modifiziert wird.

3. Verfahren nach einem der Ansprüche 1 oder 2,
**dadurch gekennzeichnet,**
**dass** ein oder mehrere Sensorfolien der ein oder mehreren Sensorfolien (3) vorzugsweise als Transferfolie, als Laminierfolie, als In-Mould-Folie, als Label, als In-Mould-Label und/oder als Sensorlabel bereitgestellt werden.

4. Verfahren nach einem der vorhergehenden Ansprüche,
**dadurch gekennzeichnet,**
**dass** die Formgebung (6), insbesondere die Kontur und/oder das Höhenrelief, der zumindest einen Sensorfolie (3) durch Abformung mindestens eines Oberflächenreliefs (7) modifiziert wird, wobei das mindestens eine Oberflächenrelief (7) insbesondere mittels ein oder mehrerer Verfahren, ausgewählt aus: thermische Replikation, UV-Replikation, Laser-Ablation, Stanzen oder Schneiden, Spritzgießen, in ein oder mehrere Schichten der Sensorfolie (3) abgeformt wird.

5. Verfahren nach einem der vorhergehenden Ansprüche,
**dadurch gekennzeichnet,**
**dass** die Formgebung, insbesondere das Höhenrelief und/oder die Kontur, der zumindest einen Sensorfolie (3) durch Aufbringen ein oder mehrerer Elemente auf eine Basisfolie (31) der Sensorfolie (3) modifiziert wird, die insbesondere mittels ein oder mehrerer der folgenden Verfahren aufgebracht werden: Drucken, insbesondere Aufdrucken eines Lacks und/oder mittels 3D-Druck, Aufkaschieren eines ein oder mehrschichtigen Folienelements, insbesondere eines Kunststofflabels, Aufbringen eines Gewebes, insbesondere Glasfasergewebes, Aufbringen eines Fasermaterials, insbesondere eines organischen Fasermaterials, Hinterspritzen, Aufbringen der ein oder mehreren Elemente mittels eines Transferverfahrens, insbesondere eines Heiß- oder Kaltprägeverfahrens,
vorzugsweise, dass als ein oder mehrere Elemente ein oder mehrerer Kunststofflabels (32) und/oder ein oder mehrere funktionale Elemente (33) auf eine erste Oberfläche (31a) einer Basisfolie (31) der Sensorfolie (3) aufgebracht werden, wobei die erste Oberfläche (31a) der Basisfolie (31) der ersten Oberfläche (3a) der Sensorfolie (3) zugewandt ist und/oder die erste Oberfläche (3a) der Sensorfolie (3) teilweise ausbildet,
wobei vorzugsweise vorgesehen ist, dass ein oder mehrere Kunststofflabels (32) und/oder ein oder mehrere funktionale Elemente (33) auf ein oder mehrere der auf der ersten Oberfläche (31a) der Basisfolie (31) der Sensorfolie (3) aufgebrachten ein oder mehreren Kunststofflabel (32) und/oder funktionalen Elemente (33) aufgebracht werden,
insbesondere, dass die ein oder mehreren Kunststofflabel (32) und/oder funktionalen Elemente (33) auf die Basisfolie (31) in dem Sensorbereich (30) der Sensorfolie (3) aufgebracht werden und den Sensorbereich (30), insbesondere projiziert auf die durch die erste Oberfläche (3a) der zumindest einen Sensorfolie (3) aufgespannten Ebene, vollständig oder teilweise überlappen.

6. Verfahren nach einem der vorangehenden Ansprüche,
**dadurch gekennzeichnet,**
**dass** als Substrat (2) ein Substrat (2) aufweisend eine erste Schmelztemperatur und als Sensorfolie (3) eine Sensorfolie (3) aufweisend eine zweite Schmelztemperatur bereitgestellt wird, wobei insbesondere die erste Schmelztemperatur kleiner ist, bevorzugt um den Faktor 1 bis 3 kleiner ist, weiter bevorzugt um den Faktor 1,3 bis 2,5 kleiner ist, als die zweite Schmelztemperatur.

7. Verfahren nach einem der vorangehenden Ansprüche,
**dadurch gekennzeichnet,**
**dass** als Substrat (2) ein Substrat (2) aufweisend eine erste Erweichungstemperatur und als Sensorfolie (3) eine Sensorfolie (3) aufweisend eine zweite Erweichungstemperatur bereitgestellt wird, wobei insbesondere die erste Erweichungstemperatur kleiner ist, bevorzugt um den Faktor 1 bis 3 kleiner ist, weiter bevorzugt um den Faktor 1,3 bis 2,8 kleiner ist, als die zweite Erweichungstemperatur.

8. Verfahren nach einem der vorangehenden Ansprüche,
**dadurch gekennzeichnet,**
**dass** die Änderung der Höhe des bereitgestellten Substrats mit auflaminiertem Sensor, vorzugsweise eines Substrats mit auflaminiertem Sensors mit einer vorbestimmten Schichtdicke, durch das Thermoformen insbesondere einen funktionalen Zusammenhang zur Schichtdicke der aufgebrachten Sensorfolie aufweist, wobei dieser funktionale Zusammenhang insbesondere ein Polynom zweiten Grades der Form y = a·x² + b·x + c, bevorzugt mit den Parametern a = 0,0035; b = 0,4832, c = 38,19; und vorzugsweise den Variablen x = Schichtdicke des aufgebrachten Sensorlabels, y = Höhe, insbesondere einer Höhe h, der Ausformung am Ort des Sensorlabels im Vergleich zu der übrigen Substratfläche ohne Sensorlabel nach dem Thermoformen, ist.

9. Verfahren nach einem der vorhergehenden Ansprüche,
**dadurch gekennzeichnet,**
**dass** als Sensorfolie (3) eine Sensorfolie (3) bereitgestellt wird, welche eine Basisfolie (31) und ein oder mehrere auf die Basisfolie (31) aufgebrachte und/oder eingebrachte elektrisch leitfähige Schichten (42) aufweist, insbesondere bestehend aus einem metallischen Material.

10. Verfahren nach Anspruch 9,
**dadurch gekennzeichnet,**
**dass** die ein oder mehreren elektrisch leitfähigen Schichten (42) in dem Sensorbereich (30) ein oder mehrere Sensorelektroden (36) zur Ausbildung ein oder mehrere der Sensorelemente (35) ausbilden, insbesondere zur Ausbildung ein oder mehrerer kapazitiver Sensorelemente und/oder ein oder mehrerer resistiver Sensorelemente ausbilden und/oder dass die ein oder mehreren elektrisch leitfähigen Schichten (42) in dem Anschlussbereich und/oder Kontaktbereich (37) ein oder mehrere Kontaktelektroden (36') zur Kontaktierung der ein oder mehreren Sensorelektroden (36) aufweisen.

11. Mehrschichtkörper (1) umfassend ein einschichtiges oder mehrschichtiges Substrat (2) mit einer ersten Oberfläche (2a) und einer zweiten Oberfläche (2b) und ein oder mehrere Sensorfolien (3), welche jeweils mindestens einen Sensorbereich (30) umfassen und eine erste Oberfläche (3a) und eine von der ersten Oberfläche (3a) abgewandte zweite Oberfläche (3b) aufweisen, hergestellt durch ein Verfahren nach einem der Ansprüche 1 bis 10,
wobei die ein oder mehreren Sensorfolien (3) auf der zweiten Oberfläche (2b) des Substrats (2) angeordnet sind, wobei die erste Oberfläche (3a) der jeweiligen Sensorfolie (3) zumindest bereichsweise auf der zweiten Oberfläche (2b) des Substrats (2) aufliegt, und wobei auf der ersten Oberfläche (2a) des Substrats (2) ein Oberflächenrelief (5) ausgeformt ist, welches durch die Formgebung (6), insbesondere Kontur und/oder Höhenrelief, ein oder mehrerer Sensorfolien der ein oder mehreren Sensorfolien (3) bestimmt ist,
wobei die ein oder mehreren Sensorfolien (3) jeweils in dem mindestens einen Sensorbereich (30) ein oder mehrere kapazitive und/oder resistive Sensorelemente, aufweisen und
wobei die ein oder mehreren Sensorfolien (3) jeweils zumindest einen Anschlussbereich und/oder Kontaktbereich (37) zur Kontaktierung von ein oder mehreren der Sensorelemente (35) aufweist,
wobei als Substrat (2) ein Substrat (2) bereitgestellt wird, welches nach dem Thermoformen eine Schichtdicke, insbesondere eine mittlere Schichtdicke, zwischen 125 µm und 3500 µm, insbesondere zwischen 400 µm und 1500 µm, bevorzugt zwischen 600 µm und 1100 µm, aufweist, und
wobei das auf der ersten Oberfläche (2a) des Substrats (2) ausgebildete Oberflächenrelief (5) eine maximale Höhendifferenz und/oder eine mittlere Höhendifferenz zwischen einem lokalen Minimum des Oberflächenreliefs (5) oder einem globalen Minimum des Oberflächenreliefs (5) und einem lokalen Maximum des Oberflächenreliefs (5) oder einem globalen Maximum des Oberflächenreliefs (5) aufweist, welche kleiner als 5000 µm, insbesondere kleiner als 2000 µm, bevorzugt kleiner als 1000 µm, ist.

12. Mehrschichtkörper nach Anspruch 11,
**dadurch gekennzeichnet,**
**dass** ein oder mehrere Sensorfolien der ein oder mehreren Sensorfolien (3) vorzugsweise als Transferfolie, als Laminierfolie, als In-Mould-Folie, als Label, als In-Mould-Label und/oder als Sensorlabel ausgebildet sind.

13. Mehrschichtkörper (1) nach Anspruch 11 oder 12,
**dadurch gekennzeichnet,**
**dass** die ein oder mehreren Sensorfolien (3) in dem Sensorbereich (30), insbesondere bereichsweise oder vollflächig, ein oder mehrere Folien und/oder ein oder mehrere Schichten aufweisen, ausgewählt aus: Basisfolie (31), Kunststofflabel (32), funktionale Elemente (33), insbesondere Lichtleiter (34), Dekorschicht (41), elektrisch leitfähige Schicht (42), insbesondere metallische Schicht, Kleberschicht, Haftvermittlerschicht, wobei die ein oder mehreren elektrisch leitfähigen Schichten jeweils ein oder mehrere Sensorelektroden (36) und/oder ein oder mehrere Kontaktelektroden (36') aufweisen.

14. Mehrschichtkörper (1) nach einem der Ansprüche 11 bis 13,
**dadurch gekennzeichnet,**
**dass** die ein oder mehreren Sensorfolien (3) in dem Sensorbereich (30) ein oder mehrere Sensorelektroden (36) und/oder ein oder mehrere Kontaktelektroden (36') aufweisen, wobei die Sensorelektroden (36) und/oder die Kontaktelektroden (36'), insbesondere projiziert auf die durch die erste Oberfläche (3a) der zumindest einen Sensorfolie (3) aufgespannten Ebene, nebeneinander angeordnet sind und/oder einander nicht überlappen und/oder sich, insbesondere bei Betrachtung parallel zu einer von der Ebene des Mehrschichtkörper definierten Flächennormalen, ein oder mehrere Sensorelektroden der ein oder mehreren Sensorelektroden (36) mit ein oder mehreren Kontaktelektroden der ein oder mehreren Kontaktelektroden (36') überlappen.

## Claims

1. Method for producing a multi-layer body (1), wherein the method comprises the following steps:
providing a single-layered or multi-layered substrate (2) with a first surface (2a) and a second surface (2b),
providing one or more sensor films (3), which each comprise at least one sensor region (30) and have a first surface (3a) and a second surface (3b) facing away from the first surface (3a),
applying the one or more sensor films (3) onto the second surface (2b) of the substrate (2) in such a way that the first surface (3a) of the respective sensor film lies at least in regions on the second surface (2b) of the substrate (2),
thermoforming a layer sequence (4) comprising the substrate (2) and the one or more sensor films (3) applied to the second surface (2b) of the substrate (2) in such a way that a surface relief (5) is formed on the first surface (2a) of the substrate (2) during thermoforming, which surface relief is determined by the shaping (6), in particular contour and/or elevation relief, of one or more of the one or more sensor films (3),
wherein the one or more sensor films (3) each have one or more capacitive and/or resistive sensor elements in the at least one sensor region (30), and
wherein the one or more sensor films (3) each has at least one connection region and/or contact region (37) for contacting one or more of the sensor elements (35),
**characterised in that**,
when providing at least one sensor film (3) of the one or more sensor films (3), the elevation relief of the at least one sensor film is modified,
wherein a substrate (2) is provided as a substrate (2), which, after thermoforming, has a layer thickness, in particular an average layer thickness, between 125 µm and 3500 µm, in particular between 400 µm and 1500 µm, preferably between 600 µm and 1100 µm, and
wherein the surface relief (5) formed on the first surface (2a) of the substrate (2) has a maximum elevation difference and/or an average elevation difference between a local minimum of the surface relief (5) or a global minimum of the surface relief (5) and a local maximum of the surface relief (5) or a global maximum of the surface relief (5) which is less than 5000 µm, in particular less than 2000 µm, preferably less than 1000 µm.

2. Method according to claim 1,
**characterised in that**,
when providing at least one sensor film (3) of the one or more sensor films (3), the contour and the elevation relief of the at least one sensor film (3) is modified.

3. Method according to one of claims 1 or 2,
**characterised in that**
one or more sensor films of the one or more sensor films (3) are preferably provided as a transfer film, as a laminating film, as an in-mould film, as a label, as an in-mould label and/or as a sensor label.

4. Method according to one of the preceding claims,
**characterised in that**
the shaping (6), in particular the contour and/or the elevation relief, of the at least one sensor film (3) is modified by moulding at least one surface relief (7), wherein the at least one surface relief (7) is moulded into one or more layers of the sensor film (3), in particular by means of one or more methods, selected from: thermal replication, UV replication, laser ablation, punching or cutting, injection moulding.

5. Method according to one of the preceding claims,
**characterised in that**
the shaping, in particular the elevation relief and/or the contour, of the at least one sensor film (3) is modified by applying one or more elements to a base film (31) of the sensor film (3), which are applied in particular by means of one or more of the following methods: printing, in particular imprinting a varnish and/or by means of 3D printing, laminating one of a single- or multi-layered film element, in particular a plastic label, applying a fabric, in particular glass fibre fabric, applying a fibre material, in particular an organic fibre material, back injection moulding, applying the one or more elements by means of a transfer process, in particular a hot or cold stamping process,
preferably, that one or more plastic labels (32) and/or one or more functional elements (33) are applied onto a first surface (31a) of a base film (31) of the sensor film (3) as one or more elements, wherein the first surface (31a) of the base film (31) faces the first surface (3a) of the sensor film (3) and/or partially forms the first surface (3a) of the sensor film (3),
wherein it is preferably provided that one or more plastic labels (32) and/or one or more functional elements (33) are applied onto one or more of the one or more plastic labels (32) and/or functional elements (33) applied onto the first surface (31a) of the base film (31) of the sensor film (3),
in particular, the one or more plastic labels (32) and/or functional elements (33) are applied onto the base film (31) in the sensor region (30) of the sensor film (3), and completely or partially overlap the sensor region (30), in particular projected onto the plane spanned by the first surface (3a) of the at least one sensor film (3).

6. Method according to one of the preceding claims,
**characterised in that**
a substrate (2) having a first melting temperature is provided as a substrate (2) and a sensor film (3) having a second melting temperature is provided as a sensor film (3), wherein in particular the first melting temperature is lower, preferably lower by a factor of 1 to 3, further preferably lower by a factor of 1.3 to 2.5, than the second melting temperature.

7. Method according to one of the preceding claims,
**characterised in that**
a substrate (2) having a first softening temperature is provided as a substrate (2) and a sensor film (3) having a second softening temperature is provided as a sensor film (3), wherein in particular the first softening temperature is lower, preferably lower by a factor of 1 to 3, further preferably lower by a factor of 1.3 to 2.8, than the second softening temperature.

8. Method according to one of the preceding claims,
**characterised in that**
the change in the height of the provided substrate with laminated sensor, preferably a substrate with a laminated sensor with a predetermined layer thickness, in particular has a functional correlation to the layer thickness of the applied sensor film due to the thermoforming, wherein this functional correlation is in particular a second-degree polynomial in the form y=a·x² + b·x + c, preferably with the parameters a=0.0035; b=0.4832, c=38.19, and preferably the variables x = layer thickness of the applied sensor label, y = height, in particular a height h, of the moulding at the location of the sensor label in comparison to the rest of the substrate surface without a sensor label after the thermoforming.

9. Method according to one of the preceding claims,
**characterised in that**
a sensor film (3) is provided as a sensor film (3) which has a base film (31) and one or more electrically conductive layers (42) applied onto and/or introduced into the base film (31), in particular consisting of a metallic material.

10. Method according to claim 9,
**characterised in that**
the one or more electrically conductive layers (42) form one or more sensor electrodes (36) in the sensor region (30) to form one or more of the sensor elements (35), in particular to form one or more capacitive sensor elements and/or form one or more resistive sensor elements, and/or that the one or more electrically conductive layers (42) in the connection region and/or contact region (37) have one or more contact electrodes (36') for contacting the one or more sensor electrodes (36).

11. Multi-layer body (1) comprising a single-layered or multi-layered substrate (2) having a first surface (2a) and a second surface (2b) and one or more sensor films (3), which each comprise at least one sensor region (30) and have a first surface (3a) and a second surface (3b) facing away from the first surface (3a), manufactured by a method according to one of claims 1 to 10,
wherein the one or more sensor films (3) are arranged on the second surface (2b) of the substrate (2), wherein the first surface (3a) of the respective sensor film (3) lies at least in regions on the second surface (2b) of the substrate (2), and wherein a surface relief (5) is moulded on the first surface (2a) of the substrate (2), which surface relief is determined by the shaping (6), in particular contour and/or elevation relief, of one or more sensor films of the one or more sensor films (3),
wherein the one or more sensor films (3) each have one or more capacitive and/or resistive sensor elements in the at least one sensor region (30), and
wherein the one or more sensor films (3) each have at least one connection region and/or contact region (37) for contacting one or more of the sensor elements (35),
wherein a substrate (2) is provided as a substrate (2) which, after thermoforming, has a layer thickness, in particular an average layer thickness, of between 125 µm and 3500 µm, in particular between 400 µm and 1500 µm, preferably between 600 µm and 1100 µm, and
wherein the surface relief (5) formed on the first surface (2a) of the substrate (2) has a maximum elevation difference and/or an average elevation difference between a local minimum of the surface relief (5) or a global minimum of the surface relief (5) and a local maximum of the surface relief (5) or a global maximum of the surface relief (5) which is less than 5000 µm, in particular less than 2000 µm, preferably less than 1000 µm.

12. Multi-layer body according to claim 11,
**characterised in that**
one or more sensor films of the one or more sensor films (3) are preferably formed as a transfer film, as a laminating film, as an in-mould film, as a label, as an in-mould label and/or as a sensor label.

13. Multi-layer body (1) according to claim 11 or 12,
**characterised in that**
the one or more sensor films (3) in the sensor region (30), in particular in regions or across the whole surface, have one or more films and/or one or more layers, selected from: a base film (31), a plastic label (32), functional elements (33), in particular light guides (34), a decorative layer (41), an electrically conductive layer (42), in particular a metallic layer, an adhesive layer, a bonding agent layer, wherein the one or more electrically conductive layers each have one or more sensor electrodes (36) and/or one or more contact electrodes (36').

14. Multi-layer body (1) according to one of claims 11 to 13,
**characterised in that**
the one or more sensor films (3) in the sensor region (30) have one or more sensor electrodes (36) and/or one or more contact electrodes (36'), wherein the sensor electrodes (36) and/or the contact electrodes (36'), in particular projected onto the plane spanned by the first surface (3a) of the at least one sensor film (3), are arranged next to one another and/or do not overlap and/or, in particular when viewed parallel to one of the surface normals defined by the plane of the multi-layer body, one or more sensor electrodes of the one or more sensor electrodes (36) overlap with one or more contact electrodes of the one or more contact electrodes (36').

## Revendications

1. Procédé de fabrication d'un corps multicouche (1), dans lequel le procédé comprend des étapes suivantes :
la fourniture d'un substrat monocouche ou multicouche (2) avec une première surface (2a) et une deuxième surface (2b),
la fourniture d'un ou de plusieurs films de détection (3), lesquels comprennent respectivement au moins une zone de détection (30) et présentent une première surface (3a) et une seconde surface (3b) opposée à la première surface (3a),
l'application d'un ou de plusieurs films de détection (3) sur la seconde surface (2b) du substrat (2) de telle manière que la première surface (3a) du film de détection respectif repose au moins par endroits sur la seconde surface (2b) du substrat (2),
le thermoformage d'une séquence de couches (4) comprenant le substrat (2) et les un ou plusieurs films de détection (3) appliqués sur la seconde surface (2b) du substrat (2) de telle manière que lors du thermoformage sur la première surface (2a) du substrat (2), un relief de surface (5) est réalisé, lequel est défini par la mise en forme (6), en particulier le contour et/ou le relief en hauteur, d'un ou plusieurs des un ou plusieurs films de détection (3),
dans lequel les un ou plusieurs films de détection (3) présentent respectivement dans l'au moins une zone de détection (30) un ou plusieurs éléments de détection capacitifs et/ou résistifs, et
dans lequel les un ou plusieurs films de détection (3) présentent respectivement au moins une zone de raccordement et/ou une zone de contact (37) pour la mise en contact d'un ou plusieurs des éléments de détection (35), **caractérisé en ce que** lors de la fourniture d'au moins un film de détection (3) des un ou plusieurs films de détection (3), le relief en hauteur de l'au moins un film de détection (3) est modifié,
dans lequel est fourni en tant que substrat (2) un substrat (2), lequel présente après le thermoformage une épaisseur de couche, en particulier une épaisseur de couche moyenne entre 125 µm et 3500 µm, en particulier entre 400 µm et 1500 µm, de manière préférée entre 600 µm et 1100 µm, et
dans lequel le relief de surface (5) réalisé sur la première surface (2a) du substrat (2) présente une différence de hauteur maximale et/ou une différence de hauteur moyenne entre un minimum local du relief de surface (5) ou un minimum global du relief de surface (5) et un maximum local du relief de surface (5) ou un maximum global du relief de surface (5), laquelle est inférieure à 5000 µm, en particulier est inférieure à 2000 µm, de manière préférée est inférieure à 1000 µm.

2. Procédé selon la revendication 1,
**caractérisé en ce**
**que** lors de la fourniture d'au moins un film de détection (3) des un ou plusieurs films de détection (3), le contour et le relief en hauteur de l'au moins un film de détection (3) sont modifiés.

3. Procédé selon l'une quelconque des revendications 1 ou 2,
**caractérisé en ce**
**qu'**un ou plusieurs films de détection des un ou plusieurs films de détection (3) sont fournis en tant que film de transfert, en tant que film stratifié, en tant que film moulé, en tant qu'étiquette, en tant qu'étiquette moulée et/ou en tant qu'étiquette de détection.

4. Procédé selon l'une quelconque des revendications précédentes,
**caractérisé en ce**
**que** la mise en forme (6), en particulier le contour et/ou le relief en hauteur, de l'au moins un film de détection (3), est modifiée par déformation d'au moins un relief de surface (7), dans lequel l'au moins un relief de surface (7) est déformé dans une ou plusieurs couches du film de détection (3) en particulier au moyen d'un ou de plusieurs procédés choisis parmi : réplication thermique, réplication UV, ablation au laser, poinçonnage ou découpage, moulage par injection.

5. Procédé selon l'une quelconque des revendications précédentes,
**caractérisé en ce**
**que** la mise en forme, en particulier le relief en hauteur et/ou le contour, de l'au moins un film de détection (3), est modifiée par application d'un ou de plusieurs éléments sur un film de base (31) du film de détection (3), qui sont appliqués en particulier au moyen d'un ou de plusieurs des procédés suivants : impression, en particulier application par impression d'un vernis et/ou au moyen d'une impression 3D, contre-collage d'un élément de film monocouche ou multicouche, en particulier d'une étiquette en matière plastique, application d'un tissu, en particulier d'un tissu à fibres de verre, application d'un matériau à base de fibres, en particulier d'un matériau à base de fibres organique, injection par l'arrière, application des un ou plusieurs éléments au moins d'un procédé de transfert, en particulier d'un procédé d'estampage à chaud ou à froid,
de préférence qu'une ou plusieurs étiquettes en matière plastique (32) et/ou un ou plusieurs éléments fonctionnels (33) sont appliqués en tant qu'un ou plusieurs éléments sur une première surface (31a) d'un film de base (31) du film de détection (3), dans lequel la première surface (31a) du film de base (31) est tournée vers la première surface (3a) du film de détection (3) et/ou réalise en partie la première surface (3a) du film de détection (3),
dans lequel il est prévu de préférence qu'une ou plusieurs étiquettes en matière plastique (32) et/ou un ou plusieurs éléments fonctionnels (33) sont appliqués sur un ou plusieurs des une ou plusieurs étiquettes en matière plastique (32) et/ou des un ou plusieurs éléments fonctionnels (33) appliqués sur la première surface (31a) du film de base (31) du film de détection (3),
en particulier que les une ou plusieurs étiquettes en matière plastique (32) et/ou les un ou plusieurs éléments fonctionnels (33) sont appliqués sur le film de base (31) dans une zone de détection (30) du film de détection (3) et chevauchent en totalité ou en partie la zone de détection (30), en particulier de manière projetée sur le plan formé par la première surface (3a) de l'au moins un film de détection (3).

6. Procédé selon l'une quelconque des revendications précédentes,
**caractérisé en ce**
**que** sont fournis en tant que substrat (2) un substrat (2) présentant une première température de fusion et en tant que film de détection (3) un film de détection (3) présentant une deuxième température de fusion, dans lequel en particulier la première température de fusion est inférieure, de manière préférée est inférieure du facteur 1 à 3, de manière davantage préférée du facteur 1,3 à 2,5, à la deuxième température de fusion.

7. Procédé selon l'une quelconque des revendications précédentes,
**caractérisé en ce**
**que** sont fournis en tant que substrat (2) un substrat (2) présentant une première température de ramollissement et en tant que film de détection (3) un film de détection (3) présentant une deuxième température de ramollissement, dans lequel en particulier la première température de ramollissement est inférieure, de manière préférée est inférieure du facteur 1 à 3, de manière davantage préférée est inférieure du facteur 1,3 à 2,8, à la deuxième température de ramollissement.

8. Procédé selon l'une quelconque des revendications précédentes,
**caractérisé en ce**
**que** la modification de la hauteur du substrat fourni avec un capteur appliqué par stratification, de préférence d'un substrat avec un capteur appliqué par stratification avec une épaisseur de couche prédéfinie par le thermoformage, présente en particulier un lien fonctionnel par rapport à l'épaisseur de couche du film de détection appliqué, dans lequel ledit lien fonctionnel est en particulier un polynôme de deuxième degré de la forme y = a·x² + b·x + c, de manière préférée avec les paramètres a = 0,0035 ; b = 0,4832, c = 38,19 ; et de préférence la variable x = épaisseur de couche de l'étiquette de détection appliquée, y = hauteur, en particulier une hauteur h ; de la formation sur l'emplacement de l'étiquette de détection en comparaison avec la surface de substrat restante sans étiquette de détection après le thermoformage.

9. Procédé selon l'une quelconque des revendications précédentes,
**caractérisé en ce**
**qu'**est fourni en tant que film de détection (3) un film de détection (3), lequel présente un film de base (31) et une ou plusieurs couches conductrices électriquement (42) appliquées et/ou intégrées sur le film de base (31), constituées en particulier d'un matériau métallique.

10. Procédé selon la revendication 9,
**caractérisé en ce**
**que** les une ou plusieurs couches conductrices électriquement (42) réalisent dans la zone de détection (30) une ou plusieurs électrodes de détection (36) destinées à réaliser un ou plusieurs des éléments de détection (35), en particulier à réaliser un ou plusieurs éléments de détection capacitifs et/ou un ou plusieurs éléments de détection résistifs, et/ou que les une ou plusieurs couches conductrices électriquement (42) présentent dans la zone de raccordement et/ou la zone de contact (37) une ou plusieurs électrodes de contact (36') pour la mise en contact des une ou plusieurs électrodes de détection (36).

11. Corps multicouche (1) comprenant un substrat monocouche ou multicouche (2) avec une première surface (2a) et une seconde surface (2b) et un ou plusieurs films de détection (3), lesquels comprennent respectivement au moins une zone de détection (30) et présentent une première surface (3a) et une seconde surface (3b) opposée à la première surface (3a), produites par un procédé selon l'une quelconque des revendications 1 à 10,
dans lequel les un ou plusieurs films de détection (3) sont disposés sur la seconde surface (2b) du substrat (2), dans lequel la première surface (3a) du film de détection (3) respectif repose au moins par endroits sur la seconde surface (2b) du substrat (2), dans lequel est formé sur la première surface (2a) du substrat (2) un relief de surface (5), lequel est défini par la mise en forme (6), en particulier le contour et/ou le relief en hauteur, d'un ou plusieurs films de détection des un ou plusieurs films de détection (3),
dans lequel les un ou plusieurs films de détection (3) présentent respectivement dans l'au moins une zone de détection (30) un ou plusieurs éléments de détection capacitifs et/ou résistifs, et
dans lequel les un ou plusieurs films de détection (3) présentent respectivement au moins une zone de raccordement et/ou une zone de contact (37) pour la mise en contact d'un ou plusieurs des éléments de détection (35),
dans lequel est fourni en tant que substrat (2) un substrat (2), lequel présente après le thermoformage une épaisseur de couche, en particulier une épaisseur de couche moyenne entre 125 µm et 3500 µm, en particulier entre 400 µm et 1500 µm, de manière préférée entre 600 µm et 1100 µm, et
dans lequel le relief de surface (5) réalisé sur la première surface (2a) du substrat (2) présente une différence de hauteur maximale et/ou une différence de hauteur moyenne entre un minimum local du relief de surface (5) ou un minimum global du relief de surface (5) et un maximum local du relief de surface (5) ou un maximum global du relief de surface (5), laquelle est inférieure à 5000 µm, en particulier est inférieure à 2000 µm, de manière préférée est inférieure à 1000 µm.

12. Corps multicouche selon la revendication 11,
**caractérisé en ce**
**qu'**un ou plusieurs films de détection des un ou plusieurs films de détection (3) sont réalisés de préférence en tant que film de transfert, en tant que film stratifié, en tant que film moulé, en tant qu'étiquette, en tant qu'étiquette moulée et/ou en tant qu'étiquette de détection.

13. Corps multicouche (1) selon la revendication 11 ou 12,
**caractérisé en ce**
**que** les un ou plusieurs films de détections (3) présentent dans la zone de détection (30), en particulier par endroits ou sur la totalité de la surface, un ou plusieurs films et/ou une ou plusieurs couches, choisis parmi : film de base (31), étiquette en matière plastique (32), éléments fonctionnels (33), en particulier guides de lumière (34), couche décorative (41), couche conductrice électriquement (42), en particulier couche métallique, couche adhésive, couche de promoteur d'adhérence, dans lequel les une ou plusieurs couches conductrices électriquement présentent respectivement une ou plusieurs électrodes de détection (36) et/ou une ou plusieurs électrodes de contact (36').

14. Corps multicouche (1) selon l'une quelconque des revendications 11 à 13,
**caractérisé en ce**
**que** les un ou plusieurs films de détection (3) présentent dans la zone de détection (30) une ou plusieurs électrodes de détection (36) et/ou une ou plusieurs électrodes de contact (36'), dans lequel les électrodes de détection (36) et/ou les électrodes de contact (36') sont disposées côte à côte, en particulier de manière projetée sur le plan formé par la première surface (3a) de l'au moins un film de détection (3), et/ou ne se chevauchent pas les unes les autres et/ou, en particulier lors d'une observation de manière parallèle à une normale de surface définie par le plan du corps multicouche, une ou plusieurs électrodes de détection des une ou plusieurs électrodes de détection (36) se chevauchent avec une ou plusieurs électrodes de contact des une ou plusieurs électrodes de contact (36').
